# EUROPEAN PATENT SPECIFICATION

(11) **EP 3 560 897 B1**
(45) Date of publication and mention of the grant of the patent: **24.11.2021**
(21) Application number: 18169607.1
(22) Date of filing: 26.04.2018
(51) Int. Cl.: C03C 17/00, C03C 17/30, C03C 23/00

(54) **PROCESS FOR MAKING A FUNCTIONALISED HOLLOW BODY, HAVING A LAYER OF GLASS, INCLUDING A SUPERPOSITION OF ONE OR MORE SILOXANES AND CONTACTING WITH A PLASMA**
VERFAHREN ZUR HERSTELLUNG EINES FUNKTIONALISIERTEN HOHLKÖRPERS, MIT EINER SCHICHT AUS GLAS, MIT ÜBERLAGERUNG EINES ODER MEHRERER SILOXANE UND BERÜHRUNG MIT EINEM PLASMA
PROCÉDÉ DE FABRICATION D'UN CORPS CREUX FONCTIONNALISÉ POSSÉDANT UNE COUCHE DE VERRE, COMPRENANT UNE SUPERPOSITION D'UN OU DE PLUSIEURS SILOXANES ET ENTRANT EN CONTACT AVEC UN PLASMA

(43) Date of publication of application: 30.10.2019
(73) Proprietor: Schott AG, 55122 Mainz (DE)
(72) Inventor: Rudigier-Voigt, Eveline, 55128 Mainz (DE); Mangold, Stephanie, 55270 Klein-Winternheim (DE); Djordjevic-Reiss, Jovana, 55130 Mainz (DE); Schneider, Thorsten, 55299 Nackenheim (DE); Anton, Andrea, 55595 Hüffelsheim (DE)
(74) Representative: Herzog IP Patentanwalts GmbH

(56) References cited:
- EP-A2- 0 811 367
- DE-A1-102006 058 771
- US-A1- 2003 134 060

## Description

The present invention refers to a process for making a functionalised hollow body, the process comprising as process steps
a) providing a hollow body, comprising a wall which at least partially surrounds an interior volume of the hollow body, wherein the wall
   i) comprises a layer of glass, and
   ii) has a wall surface, comprising a surface region;
b) at least partially superimposing the layer of glass in the surface region with a functionalising composition precursor on a side of the layer of glass which faces away from the interior volume,
   wherein the functionalising composition precursor comprises one or more siloxanes; and
c) at least partially contacting the functionalising composition precursor with a plasma, thereby obtaining the functionalised hollow body, comprising a functionalising composition which at least partially superimposes the layer of glass in the surface region on the side of the layer of glass which faces away from the interior volume.

Further, the invention refers to a functionalised hollow body, obtainable by the preceding process; to a hollow body and a closed hollow body, each having a functionalising composition with one or more siloxanes and a catalysing substance; to a process for packaging a pharmaceutical composition; to a closed hollow body obtainable by this process; to a use of a hollow body for packaging a pharmaceutical composition; a use of an emulsion; a use of a gas; and a use of a plasma.

Containers made from glass have been applied for transporting fluids and powders safely since several centuries. In the last decades, the arts in which glass containers are used for transporting fluids and powders have become increasingly diverse and sophisticated. One such art is the technical field of the present application: pharmaceutical packaging. In the pharmaceutical industry, glass containers - such as vials, syringes, ampules and cartridges - are applied as primary packaging for all kinds of pharmaceutically relevant compositions, in particular drugs, such as vaccines. Specifically in this art, the requirements put on the glass containers have become more and more sophisticated, recently.

Glass containers for pharmaceutical packaging are typically cleaned, sterilised, filled and closed, on an industrial scale in a line of processing, referred to as filling line in this document. There is a need to increase a production rate of such a filling line in the art. This may be implemented by increasing a velocity of the filling line and / or by reducing shut down times due to disruptions of the processing. In the prior art, such disruptions are typically caused by the occurrence of breakage of glass containers during processing, in particular due to high transportation velocities on the filling line. If such breakage occurs, production has to be stopped, the line has to be cleaned thoroughly from particles and dust and then the system has to be readjusted before it is started again. Contamination of the glass containers with any kind of pharmaceutically relevant particles, in particular glass particles, or pharmaceutically relevant substances has to be avoided strictly, in particular if parenteralia are packaged.

Further, scratching of the glass surfaces of the containers has to be avoided as far as possible. Scratches on the container surface may hamper an optical inspection of the filled containers, in particular for the presence of pharmaceutically relevant particles. Further, scratching can lead to glass particles or dust being disassociated from the containers. These particles and dust may contaminate the containers on the filling line.

In general, attempts to solve the above problems by applying a coating to the container surface are known in the prior art. The requirements on such coatings are rather sophisticated. They have to withstand high temperatures which occur in a sterilisation treatment referred to in the art as depyrogenisation. Further, the coatings have to withstand low temperature treatments such as freeze drying. Even more, the coatings have to withstand washing processes, which include increased temperatures and mechanical influences. This means that the advantageous properties which the coating provides to the exterior surface of the container have to be maintained and, in addition, contamination of the container interior with any pharmaceutically relevant particle or substance from the coating has to be avoided. The preceding sophisticated requirements have led to the development of rather complex multilayer coatings of the prior art. Such multilayer coatings are typically complex and costly to apply and thus, run contrary to the need for high processing rates.

The prior art teaching of US 2003/0134060 A1 "*relates to a glass container for medicinal purposes, and, more particularly, to a glass container for storing and preserving pharmaceutical or diagnostic solutions for medicinal purposes, which is provided with an anti-adherent coating on its interior surface or surfaces.*" ([0002] of US 2003/0134060 A1).

EP 0 811 367 A2 discloses glass containers for storing pharmaceutical or diagnostic solutions. These glass containers are coated on their inner side, i.e. on their surfaces which are in contact with the solutions, with a layer of oxides and/or nitrides of the elements Si, Ti, Ta, A1 or mixtures thereof, these being layer having been generated by means of a plasma CVD process.

In order to allow for an as complete as possible emptying of containers, such as pharmaceutical packaging materials, DE 10 2006 058 771 A1 teaches that corresponding substrates are provided with a hydrophobic barrier coating. Accordingly, a composite material is disclosed, which is includes a substrate and a barrier coating deposited thereon, wherein the coating contains a compound with the elements C, O and H, where further elements, except for Si, C, J, contribute a content of less than 10 at.-% and wherein the compound is of the general formula SiOₓC_{y}H_{z}, where x is at most 1.2.

In general, it is an object of the present invention to at least partly overcome a disadvantage arising from the prior art. It is a further object of the invention to provide a process for producing a glass container for pharmaceutical packaging which allows for an advantageous combination of a high production rate of the glass container and a high processing rate of the glass container on a filling line. Further, it is an object of the present invention to provide a process for producing a glass container for pharmaceutical packaging which allows for improving a suitability of the glass container which includes a heat-sensitive component, such as a syringe with a hypodermic needle glued into its tip, for processing the glass container at a high processing rate on a filling line. The preceding suitability preferably refers to a reduced tendency of the glass container to be damaged or even broken while being processed on the filling line. It is yet another object of the present invention to provide one of the preceding advantageous processes, wherein the process further allows for production of a glass container which shows an improved scratch resistance, in particular at at least a part of its exterior surface. Further, it is an object of the invention to provide one of the preceding advantageous processes, wherein the process further allows for production of a glass container which shows a reduced dry sliding friction, in particular at at least a part of its exterior surface. According to another object of the invention, one of the above advantageous processes is provided, wherein the process further allows for production of a glass container which is suitable for an easy and reliable optical inspection after having been filled. According to yet another object of the invention, one of the above advantageous processes is provided, wherein the process further allows for production of a glass container which is suitable for a post-treatment, for example a sterilisation treatment, which may be effected as a high-temperature-treatment - in particular a depyrogenisation; or a washing process; or a low-temperature-treatment - in particular a freeze drying. According to yet another object of the invention, one of the above advantageous processes is provided, wherein the process further allows for production of a glass container which does not show an increased tendency to being contaminated in a pharmaceutically relevant manner, preferably the container shows a reduced tendency to being contaminated. The preceding contamination refers, in particular, to the presence of pharmaceutically relevant particles or substances in the container interior. It is a further object of the invention to provide a process for producing a glass container for pharmaceutical packaging which shows at least one of the preceding advantages, wherein the process can be conducted at a temperature as close as possible to 20 °C, in particular significantly below 300 °C. It is another object of the invention to provide a process for producing a glass container for pharmaceutical packaging which shows at least one of the preceding advantages, wherein the process does not require a multilayer coating on a surface, preferably the exterior surface, of the glass container. In particular, no application of a primer layer is needed here. It is another object of the invention to provide a process for producing a glass container for pharmaceutical packaging which shows at least one of the preceding advantages, wherein the process does not include applying any particles to the glass container. It is another object of the invention to provide a process for producing a glass container for pharmaceutical packaging which shows at least one of the preceding advantages, wherein the process is less complex. It is a further object of the invention to provide a glass container for pharmaceutical packaging which is obtainable by one of the preceding advantageous processes.

A contribution to at least partly solving at least one, preferably more than one, of the above objects is made by the independent claims. The dependent claims provide preferred embodiments which contribute to at least partly solving at least one of the objects.

A contribution to solving at least one of the objects according to the invention is made by an embodiment 1 of a process for making a functionalised hollow body, the process comprising as process steps
a) providing a hollow body, comprising a wall which at least partially surrounds an interior volume of the hollow body, wherein the wall
   i) comprises a layer of glass, and
   ii) has a wall surface, comprising a surface region;
b) at least partially superimposing the layer of glass in the surface region with a functionalising composition precursor on a side of the layer of glass which faces away from the interior volume,
   wherein the functionalising composition precursor comprises one or more siloxanes; and
c) at least partially contacting the functionalising composition precursor with a plasma, thereby obtaining the functionalised hollow body, comprising a functionalising composition which at least partially superimposes the layer of glass in the surface region on the side of the layer of glass which faces away from the interior volume.

Preferably, during the contacting with the plasma in the process step c), more preferably during the whole process step c), the hollow body is not heated to a temperature of 300 °C or more, more preferably not above 250 °C, more preferably not above 200 °C, more preferably not above 150 °C, more preferably not above 120 °C, more preferably not above 100 °C, more preferably not above 80 °C, more preferably not above 60 °C, most preferably not above 40 °C. Preferably, during the contacting with the plasma in the process step c), more preferably during the whole process step c), the hollow body has a temperature in a range from 15 to 250 °C, preferably from 15 to 200 °C, more preferably from 20 to 150 °C, more preferably from 20 to 120 °C, more preferably from 20 to 100 °C, more preferably from 20 to 80 °C, more preferably from 20 to less than 60 °C, most preferably from 20 to less than 40 °C. Preferably, in the process step c), the functionalising composition precursor is cured, thereby obtaining the functionalising composition. In a preferred embodiment, in the process step b) the layer of glass is not superimposed with the functionalising composition precursor on a side which faces towards to interior volume. Preferably, the functionalising composition functionalises the wall surface at least in the surface region, which is preferably a region of a surface of the layer of glass, in the process step c) by being superimposed on it, preferably by being adjoined to it. In the case of adjoining, the functionalising composition preferably forms covalent bonds, preferably Si-O bonds, to the surface region, which is preferably a region of a surface of the layer of glass. Preferably, the wall surface comprises
a. an interior surface which faces the interior volume, and
b. an exterior surface which faces away from the interior volume;
   wherein the exterior surface comprises the surface region. Preferably, the functionalising composition at least partially superimposes the layer of glass on the exterior surface. In a preferred embodiment, in the process step b) the layer of glass is not superimposed with the functionalising composition precursor on the interior surface. Preferably, in the process step b) the layer of glass is superimposed with the functionalising composition precursor across at least 10 %, preferably at least 20 %, more preferably at least 30 %, more preferably at least 40 %, more preferably at least 50 %, more preferably at least 60 %, more preferably at least 70 %, more preferably at least 80 %, even more preferably at least 90 %, in each case of the exterior surface, most preferably across the full exterior surface. Preferably, the wall surface consists of the interior surface and the exterior surface. Preferably, the surface region is a region of a surface of the layer of glass. Further preferably, the surface region is contacted with the functionalising composition precursor in the process step b).

In an embodiment 2 of the process 1 according to the invention, the process 1 is designed according to its embodiment 1, wherein the plasma is obtainable from a plasma precursor which comprises one selected from the group consisting of Ar, N₂, O₂, and air; or a combination of at least two thereof.

In an embodiment 3 of the process 1 according to the invention, the process 1 is designed according to its embodiment 2, wherein prior to the process step c) the process further comprises a step of obtaining the plasma from the plasma precursor.

In an embodiment 4 of the process 1 according to the invention, the process 1 is designed according to any of its preceding embodiments, wherein in the process step c) the functionalising composition precursor, or the functionalising composition, or both in sum are contacted with the plasma for a duration in range from 1 to 600 s, preferably from 1 to 120 s, more preferably from 1 to 60 s. Preferably, the contacting is effected by streaming the plasma onto the functionalising composition, preferably for the preceding duration. In an preferred embodiment, the process step c) lasts for a duration in range from 1 to 600 s, preferably from 1 to 120 s, more preferably from 1 to 60 s.

In an embodiment 5 of the process 1 according to the invention, the process 1 is designed according to any of its preceding embodiments, wherein in the process step c) the plasma meets one or more of the following criteria:
a. a plasma pressure in a range from 10⁻³ to 1,000 mbar, preferably from 10⁻² to 100 mbar, more preferably from 0.1 to 10 mbar,
b. a temperature in a range from 25 to 120 °C, preferably 25 to less than 60 °C, more preferably 25 to less than 40 °C,
c. a degree of ionisation in a range from 10⁻⁶ to 1, preferably from 10⁻⁵ to 1, more preferably from 10⁻⁴ to 1, even more preferably from 10⁻³ to 1, most preferably from 10⁻² to 0.1.

In an embodiment 6 of the process 1 according to the invention, the process 1 is designed according to any of its preceding embodiments, wherein the functionalising composition precursor is an emulsion.

In an embodiment 7 of the process 1 according to the invention, the process 1 is designed according to any of its preceding embodiments, wherein the functionalising composition precursor comprises the one or more siloxanes in total at a proportion in a range from 1 to 50 wt.-%, preferably from 1 to 30 wt.-%, more preferably from 2 to 10 wt.-%, most preferably from 2.5 to 5 wt.-%, in each case based on the total weight of the functionalising composition precursor.

In an embodiment 8 of the process 1 according to the invention, the process 1 is designed according to any of its preceding embodiments, wherein the functionalising composition precursor further comprises a vehicle at a proportion in a range from 45 to 99 wt.-%, preferably from 70 to 99 wt.-%, more preferably from 90 to 99 wt.-%, in each case based on the total weight of the functionalising composition precursor. Preferably, the proportion of the vehicle in the functionalising composition precursor is decreased after the process step b), preferably prior to the process step c) or in the process step c) or both, further preferably by at least 50 wt.-%, more preferably at least 60 wt.-%, more preferably at least 70 wt.-%, more preferably at least 80 wt.%, more preferably at least 90 wt.-%, more preferably at least 95 wt.-%, most preferably at least 99 wt.-%, in each case based on the proportion of the vehicle in the functionalising composition precursor in the process step b). Preferably, this decreasing comprises irradiating the functionalising composition precursor with microwaves, or to expose the functionalising composition precursor to a vacuum, or both. Here, a preferred vacuum is characterised by a pressure of less than 500 mbar, preferably less than 250 mbar, more preferably less than 100 mbar, more preferably less than 50 mbar, more preferably less than 10 mbar, even more preferably less than 1 mbar, most preferably less than 0.5 mbar. During the decreasing, the hollow body preferably has a temperature of less than 300 °C, more preferably not more than 250 °C, more preferably not more than 200 °C, more preferably not more than 150 °C, more preferably not more than 120 °C, more preferably not more than 100 °C, more preferably not more than 80 °C, more preferably not more than 60 °C, most preferably not more than 40 °C. Preferably, during the decreasing of the proportion of the vehicle in the functionalising composition precursor the hollow body has a temperature in a range from 15 to 250 °C, preferably from 15 to 200 °C, more preferably from 20 to 150 °C, more preferably from 20 to 120 °C, more preferably from 20 to 100 °C, more preferably from 20 to 80 °C, more preferably from 20 to less than 60 °C, most preferably from 20 to less than 40 °C.

In an embodiment 9 of the process 1 according to the invention, the process 1 is designed according to any of its preceding embodiments, wherein the functionalising composition precursor further comprises a stabiliser. Here, the functionalising composition precursor is preferably an emulsion and the stabiliser is suitable for stabilising the emulsion. Therein, stabilising the emulsion means decreasing a tendency of the emulsion two form two or more separate liquid phases. A stable emulsion does not form two or more separate liquid phases after a suitable waiting time. An unstable emulsion, however, tends to form two or more separate liquid phases over time.

In an embodiment 10 of the process 1 according to the invention, the process 1 is designed according to any of its preceding embodiments, wherein at least one of the one or more siloxanes, preferably two or more thereof, most preferably all of the one or more siloxanes, is a polyalkylsiloxane.

In an embodiment 11 of the process 1 according to the invention, the process 1 is designed according to any of its preceding embodiments, wherein in the process step c) obtaining the functionalising composition from the functionalising composition precursor comprises a crosslinking of the one or more siloxanes; or a forming of Si-O-bonds to the wall surface in the surface region, preferably to the layer of glass; or both.

In an embodiment 12 of the process 1 according to the invention, the process 1 is designed according to its embodiment 11, wherein the crosslinking comprises an addition reaction or a hydrolysing reaction or both.

In an embodiment 13 of the process 1 according to the invention, the process 1 is designed according to its embodiment 11 or 12, wherein the crosslinking is conducted in presence of a catalysing substance which is suitable for catalysing a crosslinking of the one or more siloxanes. A preferred catalysing substance comprises, more preferably is based on, Pt or a peroxide or both.

In an embodiment 14 of the process 1 according to the invention, the process 1 is designed according to any of its preceding embodiments, wherein in the process step b) the functionalising composition precursor has a viscosity in a range from 100 to 1,000 mPa·s, preferably from 250 to 450 mPa·s.

In an embodiment 15 of the process 1 according to the invention, the process 1 is designed according to any of its preceding embodiments, wherein in the process step b) the layer of glass is contacted with the functionalising composition precursor.

In an embodiment 16 of the process 1 according to the invention, the process 1 is designed according to any of its preceding embodiments, wherein the superimposing in the process step b) comprises one selected from the group consisting of a spraying, a dipping, and a printing; or a combination of at least two thereof; wherein a dipping is particularly preferred. A preferred printing is a contact printing or a contact-less printing or both. A preferred contact printing is a tampon printing or a screen printing or both. A preferred contact-less printing is an inkjet printing.

In an embodiment 17 of the process 1 according to the invention, the process 1 is designed according to any of its preceding embodiments, wherein the process step b) or c) or both comprises adjusting a coefficient of dry sliding friction of the wall surface at least in the surface region to less than 0.3, preferably less than 0.2, more preferably less than 0.15, most preferably less than 0.1. Therein, the coefficient of dry sliding friction is determined according to the measurement method described herein.

In an embodiment 18 of the process 1 according to the invention, the process 1 is designed according to any of its preceding embodiments, wherein the process step b) or c) or both comprises adjusting a contact angle for wetting with water of the wall surface at least in the surface region to at least 70°, preferably at least 80°, more preferably at least 90°, more preferably at least 95°, most preferably at least 100°.

In an embodiment 19 of the process 1 according to the invention, the process 1 is designed according to any of its preceding embodiments, wherein prior to the process step b) the process comprises a step of at least partially decreasing a contact angle for wetting with water of the wall surface at least in the surface region by a pre-treatment. Preferably, the contact angle for wetting with water is decreased at least at a part of the exterior surface or at least at a part of the interior surface or both, more preferably across the full exterior surface or across the full interior surface or both. In another preferred design of the process, the contact angle for wetting with water is decreased across the full wall surface by the pre-treatment. Further, the contact angle for wetting with water of the at least part of the wall surface is preferably decreased to less than 30°, more preferably less than 20°, most preferably less than 10°.

In an embodiment 20 of the process 1 according to the invention, the process 1 is designed according to its embodiment 19, wherein the pre-treatment is selected from the group consisting of a plasma pre-treatment, a flame pre-treatment, a corona pre-treatment, and a wet chemical pre-treatment; or a combination of at least two thereof. A preferred plasma pre-treatment comprises contacting the surface of glass with a pre-treatment plasma obtained from an O-comprising pre-treatment plasma precursor, or from a corona discharge, or both. In case of a plasma pre-treatment, this is to be distinguished from the contacting with the plasma in the process step c), the latter not being referred to herein as pre-treatment.

In an embodiment 21 of the process 1 according to the invention, the process 1 is designed according to any of its preceding embodiments, wherein in the process step a) the hollow body has a first transmission coefficient for a transmission of light of a wavelength in a range from 400 nm to 2300 nm, preferably from 400 to 500 nm, more preferably from 430 to 490 nm, through the hollow body via the surface region, wherein after the process step c) the hollow body has a further transmission coefficient for a transmission of light of a wavelength in a range from 400 nm to 2300 nm, preferably from 400 to 500 nm, more preferably from 430 to 490 nm, through the hollow body via the surface region, wherein a ratio of the first transmission coefficient to the further transmission coefficient is in a range from 0.95 to 1.05, preferably from 0.99 to 1.01, more preferably from 0.995 to 1.005. Preferably, the first and the further transmission coefficients hold for light of each wavelength in the range from 400 nm to 2300 nm, preferably from 400 to 500 nm, more preferably from 430 to 490 nm.

In an embodiment 22 of the process 1 according to the invention, the process 1 is designed according to any of its preceding embodiments, wherein in the process step a) the hollow body has a first haze for a transmission of light through the hollow body via the surface region, wherein after the process step c) the hollow body has a further haze for a transmission of light through the hollow body via the surface region, wherein the further haze is in a range from 95.0 to 105.0 %, preferably from 99.7 to 100.3 %, more preferably from 99.8 to 100.2 %, more preferably from 99.9 to 100.1 %, most preferably from 100 to less than 100.1 %, in each case of the first haze. Preferably, the above haze values refer to a hollow body having an interior volume of about 2 ml and to a transmission of the light through a part of the hollow body which is of the shape of a hollow cylinder.

In an embodiment 23 of the process 1 according to the invention, the process 1 is designed according to any of its preceding embodiments, wherein the process further comprises a process step d) of heating the wall surface at least partially to at least 200 °C, preferably at least 250 °C, more preferably at least 300 °C, most preferably at least 320 °C. The preceding temperature is preferably kept constant for a duration of at least 3 min, preferably at least 5 min, more preferably at least 10 min, even more preferably at least 30 min, most preferably at least 1 h. The preceding duration may be up to several days, preferably 48 h, more preferably 24 h. Preferably, the interior surface or the exterior surface or both, more preferably the full wall surface, is heated in the process step d) as outlined in the preceding. Particularly preferably, the heating in the process step d) is a measure of a depyrogenisation step.

In an embodiment 24 of the process 1 according to the invention, the process 1 is designed according to any of its preceding embodiments, wherein the interior volume is in a range from 0.5 to 100 ml, preferably from 1 to 100 ml, more preferably from 1 to 50 ml, even more preferably from 1 to 10 ml, most preferably from 2 to 10 ml.

In an embodiment 25 of the process 1 according to the invention, the process 1 is designed according to any of its preceding embodiments, wherein the hollow body is a container.

In an embodiment 26 of the process 1 according to the invention, the process 1 is designed according to its embodiment 25, wherein the container is a packaging container for a medical or a pharmaceutical packaging good or both. Preferably, the container is a primary packaging container for a medical or a pharmaceutical packaging good or both. A preferred pharmaceutical packaging good is a pharmaceutical composition. Preferably, the container is suitable for packaging parenteralia in accordance with section 3.2.1 of the European Pharmcopoeia, 7th edition from 2011.

In an embodiment 27 of the process 1 according to the invention, the process 1 is designed according to its embodiment 25 or 26, wherein the container is one selected from the group consisting of a vial, a syringe, a cartridge, and an ampoule; or a combination of at least two thereof.

In an embodiment 28 of the process 1 according to the invention, the process 1 is designed according to any of its preceding embodiments, wherein the wall comprises from top to bottom of the hollow body
a] a top region;
b] a body region, which follows the top region via a shoulder; and
c] a bottom region, which follows the body region via a heel.

Preferably, the body region is a lateral region of the hollow body. Particularly preferable, the body region of the wall forms a hollow cylinder. Additionally or alternatively preferable to the preceding, the top region of the wall comprises from top to bottom of the wall a flange and a neck. Further preferably, the surface region of the wall surface lies in one selected from the group consisting of the shoulder, the body region, and the heel, or in a combination of at least two of these. Further preferably, in the process step b) the layer of glass is at least partially superimposed in the surface region as a first surface region and, additionally, in a further surface region with the functionalising composition precursor on a side of the layer of glass which faces away from the interior volume, wherein in the functionalised hollow body the functionalising composition at least partially superimposes the layer of glass in the first and the further surface region on a side of the layer of glass which faces away from the interior volume. Herein, the first and the further surface regions, preferably, lie in one selected from the group consisting of the shoulder, the body region, and the heel, or in a combination of at least two of these. Therein, the first and the further surface regions may lie in the same or different of the preceding regions.

In an embodiment 29 of the process 1 according to the invention, the process 1 is designed according to its embodiment 28, wherein throughout the body region a thickness of the layer of glass is in a range from ±0.3 mm, preferably ±0.2 mm, more preferably ±0.1 mm, most preferably ±0.08 mm, in each case based on a mean value of this thickness in the body region of the wall.

In an embodiment 30 of the process 1 according to the invention, the process 1 is designed according to its embodiment 28 or 29, wherein throughout the body region a thickness of the layer of glass is in a range from 0.5 to 2 mm, more preferably from 0.6 to 1.7 mm, most preferably from 0.9 to 1.6 mm. In a preferred embodiment throughout the body region a thickness of the layer of glass is in a range from 0.9 to 1.1 mm. In a further preferred embodiment throughout the body region a thickness of the layer of glass is in a range from 1.5 to 1.7 mm.

In an embodiment 31 of the process 1 according to the invention, the process 1 is designed according to any of its preceding embodiments, wherein the glass is of a type selected from the group consisting of a type I glass, a borosilicate glass, an aluminosilicate glass, and fused silica; or of a combination of at least two thereof.

In an embodiment 32 of the process 1 according to the invention, the process 1 is designed according to any of its preceding embodiments, wherein a thickness of the functionalising composition is in a range from 50 to 750 nm, preferably from, 150 to 350 nm.

In an embodiment 33 of the process 1 according to the invention, the process 1 is designed according to any of its preceding embodiments, wherein after the process step c) the hollow body has a transmission coefficient for a transmission of light of a wavelength in a range from 400 nm to 2300 nm, preferably from 400 to 500 nm, more preferably from 430 to 490 nm, through the hollow body via the surface region, of more than 0.7, preferably more than 0.75, more preferably more than 0.8 most preferably more than 0.82.

In an embodiment 34 of the process 1 according to the invention, the process 1 is designed according to any of its preceding embodiments, wherein after the process step c) the hollow body has a haze for a transmission of light through the hollow body via the surface region in a range from 5 to 50 %, preferably from 10 to 40 %, more preferably from 10 to 35 %, more preferably from 15 to 25 %, preferably from 15 to 22 %.

In an embodiment 35 of the process 1 according to the invention, the process 1 is designed according to any of its preceding embodiments, wherein towards the interior volume the layer of glass is at least partially superimposed by an alkali metal barrier layer or by a hydrophobic layer or both.

A contribution to solving at least one of the objects according to the invention is made by an embodiment 1 of a functionalised hollow body obtainable by the process 1 according to any of its embodiments. In a preferred embodiment of the functionalised hollow body, this functionalised hollow body shows the technical features of the hollow body of the invention according to any of its embodiments, respectively.

A contribution to solving at least one of the objects according to the invention is made by an embodiment 1 of a hollow body, comprising a wall which at least partially surrounds an interior volume of the hollow body; wherein the wall
a) comprises a layer of glass, and
b) has a wall surface, comprising a surface region;
   wherein at least in the surface region the layer of glass is superimposed by a functionalising composition on a side of the layer of glass which is facing away from the interior volume; wherein the functionalising composition comprises

A. one or more siloxanes, and
B. a catalysing substance which is suitable for catalysing a crosslinking of the one or more siloxanes.

In a preferred embodiment, the layer of glass is not superimposed with the functionalising composition on a side of the layer of glass which faces towards to interior volume. Preferably, the functionalising composition adjoins the wall surface at least in the surface region. Further preferably, the surface region is a region of a surface of the layer of glass. Preferably, the functionalising composition functionalises the wall surface at least in the surface region, which is preferably a region of a surface of the layer of glass, by being superimposed on it, preferably by being adjoined to it. In the case of adjoining, the functionalising composition preferably forms covalent bonds, preferably Si-O bonds, to the surface region, which is preferably a region of a surface of the layer of glass.

In an embodiment 2 of the hollow body according to the invention, the hollow body is designed according to its embodiment 1, wherein the wall surface comprises
a. an interior surface which faces the interior volume, and
b. an exterior surface which faces away from the interior volume;
wherein the exterior surface comprises the surface region. Preferably, the functionalising composition at least partially superimposes the layer of glass on the exterior surface. In a preferred embodiment, the layer of glass is not superimposed with the functionalising composition precursor on the interior surface. Preferably, the layer of glass is superimposed with the functionalising composition precursor across at least 10 %, preferably at least 20 %, more preferably at least 30 %, more preferably at least 40 %, more preferably at least 50 %, more preferably at least 60 %, more preferably at least 70 %, more preferably at least 80 %, even more preferably at least 90 %, in each case of the exterior surface, most preferably across the full exterior surface. Preferably, the wall surface consists of the interior surface and the exterior surface.

In an embodiment 3 of the hollow body according to the invention, the hollow body is designed according to its embodiment 1 or 2, wherein the functionalising composition adjoins the layer of glass. Preferably, the functionalising composition forms covalent bonds, preferably Si-O bonds, to the layer of glass.

In an embodiment 4 of the hollow body according to the invention, the hollow body is designed according to any of its preceding embodiments, wherein the functionalising composition comprises the catalysing substance at a proportion in a range from more than 0 up to less than 1 wt.-%, preferably from more than 0 up to less than 0.5 wt.-%, more preferably from more than 0 up to less than 0.1 wt.-%, in each case based on the functionalising composition.

In an embodiment 5 of the hollow body according to the invention, the hollow body is designed according to any of its preceding embodiments, wherein the catalysing substance comprises, preferably is based on, Pt or a peroxide or both.

In an embodiment 6 of the hollow body according to the invention, the hollow body is designed according to any of its preceding embodiments, wherein the one or more siloxanes are at least partially crosslinked.

In an embodiment 7 of the hollow body according to the invention, the hollow body is designed according to any of its preceding embodiments, wherein the functionalising composition comprises the one or more siloxanes in total at a proportion of at least 50 wt.-%, preferably at least 60 wt.-%, more preferably at least 70 wt.-%, more preferably at least 80 wt.-%, more preferably at least 90 wt.-%, even more preferably at least 95 wt.-%, most preferably at least 99 wt.-%, in each case based on the functionalising composition. Typically, the functionalising composition comprises the one or more siloxanes in total at a proportion of less than 100 wt.-%.

In an embodiment 8 of the hollow body according to the invention, the hollow body is designed according to any of its preceding embodiments, wherein at least one of the one or more siloxanes is a polyalkylsiloxane.

In an embodiment 9 of the hollow body according to the invention, the hollow body is designed according to any of its preceding embodiments, wherein the least one of the one or more siloxanes are at least partially bonded to the layer of glass via covalent Si-O-bonds.

In an embodiment 10 of the hollow body according to the invention, the hollow body is designed according to any of its preceding embodiments, wherein at least in the surface region a coefficient of dry sliding friction of the wall surface is less than 0.3, preferably less than 0.2, more preferably less than 0.15, most preferably less than 0.1. Therein, the coefficient of dry sliding friction is determined according to the measurement method described herein.

In an embodiment 11 of the hollow body according to the invention, the hollow body is designed according to any of its preceding embodiments, wherein at least in the surface region a contact angle for wetting with water of the wall surface is at least 70°, preferably at least 80°, more preferably at least 90°, more preferably at least 95°, most preferably at least 100°.

In an embodiment 12 of the hollow body according to the invention, the hollow body is designed according to any of its preceding embodiments, wherein the hollow body has a first transmission coefficient for a transmission of light of a wavelength in a range from 400 nm to 2300 nm, preferably from 400 to 500 nm, more preferably from 430 to 490 nm, through the hollow body not via any region of the wall surface which is superimposed by the functionalising composition, wherein the hollow body has a further transmission coefficient for a transmission of light of a wavelength in a range from 400 nm to 2300 nm, preferably from 400 to 500 nm, more preferably from 430 to 490 nm, through the hollow body via the surface region, wherein a ratio of the first transmission coefficient to the further transmission coefficient is in a range from 0.95 to 1.05, preferably from 0.99 to 1.01, more preferably from 0.995 to 1.005. Preferably, the first and the further transmission coefficients hold for light of each wavelength in the range from 400 nm to 2300 nm, preferably from 400 to 500 nm, more preferably from 430 to 490 nm.

In an embodiment 13 of the hollow body according to the invention, the hollow body is designed according to any of its preceding embodiments, wherein the hollow body has a first haze for a transmission of light through the hollow body not via any region of the wall surface which is superimposed by the functionalising composition, wherein the hollow body has a further haze for a transmission of light through the hollow body via the surface region, wherein the further haze is in a range from 95.0 to 105.0 %, preferably from 99.7 to 100.3 %, more preferably from 99.8 to 100.2 %, more preferably from 99.9 to 100.1 %, most preferably from 100 to less than 100.1 %, in each case of the first haze. Preferably, the above haze values refer to a hollow body having an interior volume of about 2 ml and to a transmission of the light through a part of the hollow body which is of the shape of a hollow cylinder.

In an embodiment 14 of the hollow body according to the invention, the hollow body is designed according to any of its preceding embodiments, wherein the hollow body has a transmission coefficient for a transmission of light of a wavelength in a range from 400 nm to 2300 nm, preferably from 400 to 500 nm, more preferably from 430 to 490 nm, through the hollow body via the surface region, of more than 0.7, preferably more than 0.75, more preferably more than 0.8 most preferably more than 0.82.

In an embodiment 15 of the hollow body according to the invention, the hollow body is designed according to any of its preceding embodiments, wherein the hollow body has a haze for a transmission of light through the hollow body via the surface region in a range from 5 to 50 %, preferably from 10 to 40 %, more preferably from 10 to 35 %, more preferably from 15 to 25 %, preferably from 15 to 22 %.

In an embodiment 16 of the hollow body according to the invention, the hollow body is designed according to any of its preceding embodiments, wherein the interior volume is in a range from 0.5 to 100 ml, preferably from 1 to 100 ml, more preferably from 1 to 50 ml, even more preferably from 1 to 10 ml, most preferably from 2 to 10 ml.

In an embodiment 17 of the hollow body according to the invention, the hollow body is designed according to any of its preceding embodiments, wherein the hollow body is a container.

In an embodiment 18 of the hollow body according to the invention, the hollow body is designed according to its embodiment 17, wherein the container is a packaging container for a medical or a pharmaceutical packaging good or both. Preferably, the container is a primary packaging container for a medical or a pharmaceutical packaging good or both. A preferred pharmaceutical packaging good is a pharmaceutical composition. Preferably, the container is suitable for packaging parenteralia in accordance with section 3.2.1 of the European Pharmcopoeia, 7th edition from 2011.

In an embodiment 19 of the hollow body according to the invention, the hollow body is designed according to its embodiment 17 or 18, wherein the container is one selected from the group consisting of a vial, a syringe, a cartridge, and an ampoule; or a combination of at least two thereof.

In an embodiment 20 of the hollow body according to the invention, the hollow body is designed according to any of its preceding embodiments, wherein the wall comprises from top to bottom of the hollow body
a] a top region;
b] a body region, which follows the top region via a shoulder; and
c] a bottom region, which follows the body region via a heel.

Preferably, the body region is a lateral region of the hollow body. Particularly preferable, the body region of the wall forms a hollow cylinder. Additionally or alternatively preferable to the preceding, the top region of the wall comprises from top to bottom of the wall a flange and a neck. Further preferably, the surface region of the wall surface lies in one selected from the group consisting of the shoulder, the body region, and the heel, or in a combination of at least two of these. Further preferably, the layer of glass is at least partially superimposed in the surface region as a first surface region and, additionally, in a further surface region with the functionalising composition on a side of the layer of glass which faces away from the interior volume. Herein, the first and the further surface regions, preferably, lie in one selected from the group consisting of the shoulder, the body region, and the heel, or in a combination of at least two of these. Therein, the first and the further surface regions may lie in the same or different of the preceding regions.

In an embodiment 21 of the hollow body according to the invention, the hollow body is designed according to its embodiment 20, wherein throughout the body region a thickness of the layer of glass is in a range from ±0.3 mm, preferably ±0.2 mm, more preferably ±0.1 mm, most preferably ±0.08 mm, in each case based on a mean value of this thickness in the body region of the wall.

In an embodiment 22 of the hollow body according to the invention, the hollow body is designed according to its embodiment 20 or 21, wherein throughout the body region a thickness of the layer of glass is in a range from 0.5 to 2 mm, more preferably from 0.6 to 1.7 mm, most preferably from 0.9 to 1.6 mm. In a preferred embodiment throughout the body region a thickness of the layer of glass is in a range from 0.9 to 1.1 mm. In a further preferred embodiment throughout the body region a thickness of the layer of glass is in a range from 1.5 to 1.7 mm.

In an embodiment 23 of the hollow body according to the invention, the hollow body is designed according to any of its preceding embodiments, wherein the glass is of a type selected from the group consisting of a type I glass, a borosilicate glass, an aluminosilicate glass, and fused silica; or of a combination of at least two thereof.

In an embodiment 24 of the hollow body according to the invention, the hollow body is designed according to any of its preceding embodiments, wherein a thickness of the functionalising composition is in a range from 50 to 750 nm, preferably from, 150 to 350 nm.

In an embodiment 25 of the hollow body according to the invention, the hollow body is designed according to any of its preceding embodiments, wherein towards the interior volume the layer of glass is at least partially superimposed by an alkali metal barrier layer or by a hydrophobic layer or both.

In an embodiment 26 of the hollow body according to the invention, the hollow body is designed according to any of its preceding embodiments, wherein the interior volume comprises a pharmaceutical composition.

A contribution to solving at least one of the objects according to the invention is made by an embodiment 1 of a closed hollow body 1, comprising a wall which at least partially surrounds an interior volume which comprises a pharmaceutical composition;
wherein the wall
a) comprises a layer of glass, and
b) has a wall surface, comprising a surface region;
   wherein at least in the surface region the layer of glass is superimposed by a functionalising composition on a side of the layer of glass which is facing away from the interior volume;
   wherein the functionalising composition comprises

A. one or more siloxanes, and
B. a catalysing substance which is suitable for catalysing a crosslinking of the one or more siloxanes.

In a preferred embodiment of the closed hollow body 1, it shows the technical features of the hollow body of the invention according to any of its embodiments 1 to 26, respectively.

A contribution to solving at least one of the objects according to the invention is made by an embodiment 1 of a process 2 comprising as process steps
A) providing the functionalised hollow body according to any of its embodiments, or the hollow body according to any of its embodiments 1 to 25;
B) inserting a pharmaceutical composition into the interior volume; and
C) closing the hollow body.

The closing in the process step C) preferably comprises contacting the functionalised hollow body or the hollow body with a closure, preferably a lid, preferably covering an opening of the functionalised hollow body or the hollow body with the closure, and joining the closure to the functionalised hollow body or the hollow body. The joining preferably comprises creating a form-fit of the functionalised hollow body or the hollow body, preferably of the flange of the functionalised hollow body or the hollow body, with the closure. The form-fit is preferably created via a crimping step. The process 2 is preferably a process for packaging the pharmaceutical composition.

In an embodiment 2 of the process 2 according to the invention, the process 2 is designed according to its embodiment 1, wherein prior to the process step B) the process further comprises a step of heating the wall surface at least partially to at least 200 °C, preferably at least 250 °C, more preferably at least 300 °C, most preferably at least 320 °C. The preceding temperature is preferably kept constant for a duration of at least 3 min, preferably at least 5 min, more preferably at least 10 min, even more preferably at least 30 min, most preferably at least 1 h. The preceding duration may be up to several days, preferably 48 h, more preferably 24 h. Preferably, the interior surface or the exterior surface or both, more preferably the full wall surface, is heated in the process step d) as outlined in the preceding. Particularly preferably, the heating in the process step d) is a measure of a depyrogenisation step.

A contribution to solving at least one of the objects according to the invention is made by an embodiment 1 of a closed hollow body 2 obtainable by the process 2 according to any of its embodiments.

A contribution to solving at least one of the objects according to the invention is made by an embodiment 1 of a process 3 comprising as process steps
A. providing the hollow body according to its embodiment 26, or the closed hollow body 1 or 2, each according to any of its embodiments; and
B. administering the pharmaceutical composition to a patient.

A contribution to solving at least one of the objects according to the invention is made by an embodiment 1 of a use 1 of the functionalised hollow body according to any of its embodiments, or of the hollow body according to any of its embodiments 1 to 25, each for packaging a pharmaceutical composition. The packaging preferably comprises inserting the pharmaceutical composition into the interior volume and closing the hollow body.

A contribution to solving at least one of the objects according to the invention is made by an embodiment 1 of a use 2 of an emulsion, comprising a siloxane, preferably two or more siloxanes, for functionalising at least a part of an exterior surface of a wall of a container, wherein the wall comprises a layer of glass. A preferred container is a pharmaceutical packaging container, more preferably one selected from the group consisting of a vial, a syringe, a cartridge, and an ampoule; or a combination of at least two thereof. Preferably, the emulsion is used for functionalising at least a part of the exterior surface, wherein the at least part is a surface of the layer of glass. Further preferably, the exterior surface is a surface of the layer of glass.

In an embodiment 2 of the use 2 according to the invention, the use 2 is designed according to its embodiment 1, wherein the functionalising comprises
a) at least partially superimposing the layer of glass on the exterior surface with the emulsion, and
b) at least partially contacting the emulsion, or a composition obtained from the emulsion, or both with a plasma.

A contribution to solving at least one of the objects according to the invention is made by an embodiment 1 of a use 3 of a gas for creating a plasma for at least partially contacting a functionalising composition precursor, comprising a siloxane, preferably two or more siloxanes, wherein the functionalising composition precursor is superimposed on an exterior surface of a wall of a container, wherein the wall comprises a layer of glass. A preferred container is a pharmaceutical packaging container, more preferably one selected from the group consisting of a vial, a syringe, a cartridge, and an ampoule; or a combination of at least two thereof. Preferably, the functionalising composition precursor adjoins at least a part of the exterior surface which is a surface of the layer of glass. Further preferably, the exterior surface is a surface of the layer of glass.

In an embodiment 2 of the use 3 according to the invention, the use 3 is designed according to its embodiment 1, wherein the gas comprises one selected from the group consisting of Ar, N₂, O₂, and air; or a combination of at least two thereof.

A contribution to solving at least one of the objects according to the invention is made by an embodiment 1 of a use 4 of a plasma for at least partially contacting a functionalising composition precursor, comprising a siloxane, preferably two or more siloxanes, wherein the functionalising composition precursor is superimposed on an exterior surface of a wall of a container, wherein the wall comprises a layer of glass. A preferred container is a pharmaceutical packaging container, more preferably one selected from the group consisting of a vial, a syringe, a cartridge, and an ampoule; or a combination of at least two thereof. Preferably, the functionalising composition precursor adjoins at least a part of the exterior surface which is a surface of the layer of glass. Further preferably, the exterior surface is a surface of the layer of glass.

In an embodiment 3 of the use 3 according to the invention, the use 3 is designed according to its embodiment 1 or 2; in an embodiment 2 of the use 4 according to the invention, the use 4 is designed according to its embodiment 1, wherein in both cases the plasma meets one or more of the following criteria:
a. a plasma pressure in a range from 10⁻³ to 1,000 mbar, preferably from 10⁻² to 100 mbar, more preferably from 0.1 to 10 mbar
b. a temperature in a range from 25 to 120 °C, preferably 25 to less than 60 °C, more preferably 25 to less than 40 °C,
c. a degree of ionisation in a range from 10⁻⁶ to 1, preferably from 10⁻⁵ to 1, more preferably from 10⁻⁴ to 1, even more preferably from 10⁻³ to 1, most preferably from 10⁻² to 0.1.

Features described as preferred in one category of the invention, for example according to the process 1, are analogously preferred in an embodiment of the other categories according to the invention, for example an embodiment of the hollow body or of a use according to the invention.

### Hollow body

The hollow body according to the invention may have any size or shape which the skilled person deems appropriate in the context of the invention. Preferably, the head region of the hollow body comprises an opening, which allows for inserting a pharmaceutical composition into the interior volume of the hollow body. In that case, the wall surrounds the interior volume of the hollow body only partially. The hollow body is preferably a glass body or a glass container in that sense that the layer of glass extends over the full area of the wall surface. In that case, the layer of glass preferably determines a macroscopic shape of the wall. Preferably, the layer of glass is of a one-piece design. The layer of glass of such a glass body or a glass container may preferably be made by blow moulding a glass melt; or by preparing a tube of a glass, preferably in form of a hollow cylinder, forming the bottom of the hollow body from one end of the tube, thereby closing the tube at this end, and forming the head region of the hollow body from the opposite end of the tube. According to the nomenclature used herein, the wall of the hollow body comprises the layer of glass and every layer and every functionalisation superimposed thereon. The wall surface is formed by the surface of the layer or functionalisation which is positioned at an outermost or innermost position of the wall.

For the use in this document, the interior volume represents the full volume of the interior of the hollow body. This volume may be determined by filling the interior of the hollow body with water up to the brim and measuring the volume of the amount of water which the interior can take up to the brim. Hence, the interior volume as used herein is not a nominal volume as it is often referred to in the technical field of pharmacy. This nominal volume may for example be less than the interior volume by a factor of about 0.5.

### Glass

The glass of the layer of glass may be any type of glass and may consist of any material or combination of materials which the skilled person deems suitable in the context of the invention. Preferably, the glass is suitable for pharmaceutical packaging. Particularly preferable, the glass is of type I in accordance with the definitions of glass types in section 3.2.1 of the European Pharmacopoeia, 7th edition from 2011. Additionally or alternatively preferable to the preceding, the glass is selected from the group consisting of a borosilicate glass, an aluminosilicate glass, and fused silica; or a combination of at least two thereof. For the use in this document, an aluminosilicate glass is a glass which has a content of Al₂O₃ of more than 8 wt.-%, preferably more than 9 wt.-%, particularly preferable in a range from 9 to 20 wt.-%, in each case based on the total weight of the glass. A preferred aluminosilicate glass has a content of B₂O₃ of less than 8 wt.-%, preferably at maximum 7 wt.-%, particularly preferably in a range from 0 to 7 wt.-%, in each case based on the total weight of the glass. For the use in this document, a borosilicate glass is a glass which has a content of B₂O₃ of at least 1 wt.-%, preferably at least 2 wt.-%, more preferably at least 3 wt.-%, more preferably at least 4 wt.-%, even more preferably at least 5 wt.-%, particularly preferable in a range from 5 to 15 wt.-%, in each case based on the total weight of the glass. A preferred borosilicate glass has a content of Al₂O₃ of less than 7.5 wt.-%, preferably less than 6.5 wt.-%, particularly preferably in a range from 0 to 5.5 wt.-%, in each case based on the total weight of the glass. In a further aspect, the borosilicate glass has a content of Al₂O₃ in a range from 3 to 7.5 wt.-%, preferably in a range from 4 to 6 wt.-%, in each case based on the total weight of the glass.

A glass which is further preferred according to the invention is essentially free from B. Therein, the wording "essentially free from B" refers to glasses which are free from B which has been added to the glass composition by purpose. This means that B may still be present as an impurity, but preferably at a proportion of not more than 0.1 wt.-%, more preferably not more than 0.05 wt.-%, in each case based on the weight of the glass.

### Functionalising composition precursor

The functionalising composition precursor is a precursor of the functionalising composition according to the invention. Obtaining the functionalising composition from the functionalising composition precursor comprises contacting the functionalising composition precursor with a plasma. Preferably, obtaining the functionalising composition from the functionalising composition precursor further comprises crosslinking the one or more siloxanes of the functionalising composition precursor. This crosslinking preferably comprises an addition reaction or a hydrolysing reaction or both. Preferably, the functionalising composition precursor is liquid, more preferably an emulsion. Preferably, the functionalising composition precursor comprises 2 or 3 different types of siloxanes.

### Plasma and plasma precursor

As the plasma any plasma which the skilled person knows and which he deems appropriate for the inventive purpose comes into consideration. Further, any plasma precursor from which the preceding plasma may be obtained may be applied as the plasma precursor in the context of the invention. The plasma precursor is preferably a gas. A preferred plasma precursor comprises one selected from the group consisting of Ar, N₂, O₂, and air; or a combination of at least two thereof. Therein, a proportion of the Ar in the plasma precursor is preferably in a range from 50 to 100 vol.-%, more preferably 50 to less than 100 vol.-%, more preferably 50 to 95 vol.-%, more preferably 50 to 90 vol.-%, more preferably 50 to 85 vol.-%; or a proportion of the O₂ in the plasma precursor is preferably in a range from more than 0 to 50 vol.-%, more preferably from more than 0 to 50 vol.-%, more preferably from 5 to 50 vol.-%, more preferably from more than 10 to 50 vol.-%, more preferably from more than 15 to 50 vol.-%; or both, in each case based on the total volume of the plasma precursor. A preferred plasma precursor consists of O₂ and Ar. Obtaining the plasma from the plasma precursor may be effected in any manner which the skilled person knows for creating a plasma. The obtaining preferably comprises irradiating the plasma precursor with electromagnetic waves, or passing an electric current through the plasma precursor, or both. Therein, preferred electromagnetic waves are one selected from the group consisting of electromagnetic waves with frequencies in the microwave range, electromagnetic waves at radio frequencies, electromagnetic waves at audio frequencies, and electromagnetic waves at low frequencies, or a combination of at least two thereof. Therein, electromagnetic waves with frequencies in the microwave range are particularly preferred. A preferred electromagnetic current is a DC current. A preferred DC current is driven by one selected from the group consisting of a glow discharge, a corona discharge, and an electric arc, or by a combination of at least two thereof. The plasma precursor or the plasma or both is preferably characterised by an ionisation energy in a range from 10 to 15 eV, preferably from 11 to 14 eV, more preferably from 12 to 14 eV. Preferably, the plasma precursor or the plasma or both has an ionisation energy at one selected from the group consisting of 12.1 eV, 13.6 eV, 15.6 eV, 14.5 eV, and 15.7 eV, or a combination of at least two thereof. The ionisation energy at 12.1 eV preferably corresponds to an ionisation energy for obtaining O₂^{÷} from O₂, the ionisation energy at 13.6 eV preferably to for obtaining O⁺ from O, the ionisation energy at 15.6 eV preferably to for obtaining N₂⁺ from N₂, the ionisation energy at 14.5 eV preferably to for obtaining N⁺ from N, the ionisation energy at 15.7 eV preferably to for obtaining Ar⁺ from Ar.

### Emulsion

The functionalising composition precursor is preferably an emulsion. In the context of the invention, an emulsion is a mixture of at least two liquid phases. Therein, the at least two liquid phases as such are typically immiscible. In an emulsion, typically at least one liquid phase (referred to as dispersed phase) is dispersed in another liquid phase (referred to as continuous phase). In the context of the invention, the continuous phase is preferably the vehicle.

### Vehicle

As the vehicle each vehicle which the skilled person knows and deems appropriate for being used in the context of the invention comes into consideration. Here, the vehicle is a, preferably liquid, medium which allows for the at least partially superposition of the functionalising composition precursor onto the surface region in a convenient, preferably uniform, manner. In case, the functionalising composition precursor is an emulsion, the vehicle is preferably a continuous phase of the emulsion. In general, the vehicle may be organic or inorganic or both. A preferred vehicle is inorganic. A preferred inorganic vehicle is water.

### Stabiliser

In the context of the invention any stabiliser which the skilled person knows and deems appropriate to be applied for purposes of the invention comes into consideration. A preferred stabiliser is designed for stabilising the functionalising composition precursor, in particular in case of a functionalising composition precursor which is an emulsion. Stabilising the emulsion means decreasing a tendency of the emulsion two form two or more separate liquid phases. A stable emulsion does not form two or more separate liquid phases after a suitable waiting time. An unstable emulsion, however, tends to form two or more separate liquid phases over time.

Generally, a preferred stabiliser is one or more organic compounds. Preferred organic compounds are polar or non-polar or a combination thereof. Preferred non-polar compounds are selected from the group consisting of a linear hydrocarbon, a branched hydrocarbon, a cyclic hydrocarbon and an aromatic hydrocarbon or a combination of two or more thereof. Preferred hydrocarbons are terpenes, parafines, benzene, toluene, xylene, cyclo pentane, cyclo hexane, cyclo heptane, C₄- to C₁₂-hydrocarbons or a combination of at least two thereof.

Preferred polar compounds are aprotic or protic, preferably protic. Preferred aprotic polar compounds are selected form the group consisting of an ester, an ether, a lactame and a keton or a combination of at least two thereof. Amongst these, butylacetate, methoxybutylacetate, butyldiglycole, butyldiglykolacetate, methoxypropylacetate or a combination of at least two thereof are preferred esters; dipropyleneglycolemonomethylether, dipropylenglycolemono-butylether, propyleneglycolemonobutylether, propyleneglycolmonopropylether, propylenegly-colmonoethylether or a combination of at least two thereof are preferred ethers; ethylpyrrolidon, methylpyrrolidon or a combination of two thereof are preferred lactames; cyclohexanon is the preferred ketone.

Preferred protic polar compounds are alcohols. Amongst these butylglycole, diacetonalcohol, diethylenglycole, C₂- to C₈-alcohol, monoethylenglycole, propylenglycole or a combination of at least two thereof are preferred.

### Siloxanes

Preferably, at least one of the one or more siloxanes in the functionalising composition precursor, preferably two or more thereof, most preferably all of the one or more siloxanes, is a polyorganosiloxane, more preferably a polyalkylsiloxane. A preferred polyalkylsiloxane is a polymethylsiloxane. A preferred polymethylsiloxane is a polydimethylsiloxane. Preferably, at least one, preferably at least two, more preferably all, of the one or more siloxanes comprises a functional group which is suitable for crosslinking the one or more siloxanes. Here, the one or more siloxanes may comprise same or different functional groups. Further, a preferred siloxane comprises a functional group selected from the group consisting of a vinyl group; an alkoxy group; an amino group; an epoxy group; a hydride group; a hydroxyl group, preferably a carbinol group; an acrylate group, preferably a methacrylate group; and a group containing F; or a combination of at least two thereof. Accordingly, the one or more siloxanes comprise one selected from the group contusing of a vinyl functional siloxane, preferably a vinyl functional fluorosiloxane; an amino functional siloxane; a hydroxyl functional siloxane, preferably a carbinol functional siloxane; an acrylate functional siloxane, preferably a methacrylate functional siloxane; and a hydride functional siloxane; or a combination of at least two thereof. A preferred vinyl functional siloxane is described by one of the following structural formulas: 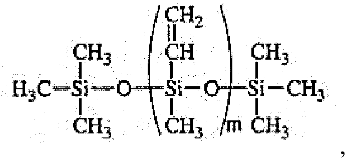 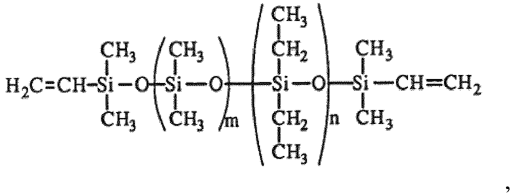 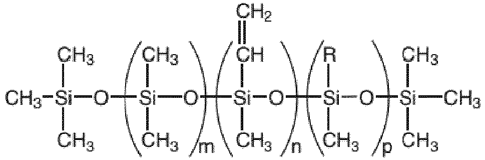 and 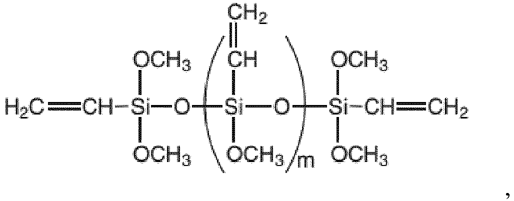 wherein m, n and p are integers which are independently form each other in a range from 2 to 10,000, preferably from 3 to 5,000 and particular preferred form 4 to 2,500. A preferred vinyl functional fluorosiloxane is described by the following structural formula: 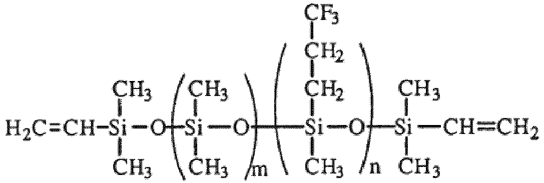 wherein m and n are integers which are independently form each other in a range from 2 to 10,000, preferably from 3 to 5,000 and particular preferred form 4 to 2,500. A preferred amino functional siloxane is described by one of the following structural formulas: 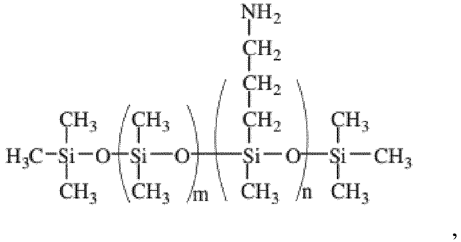 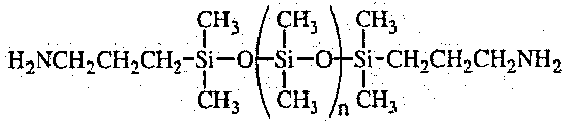 and 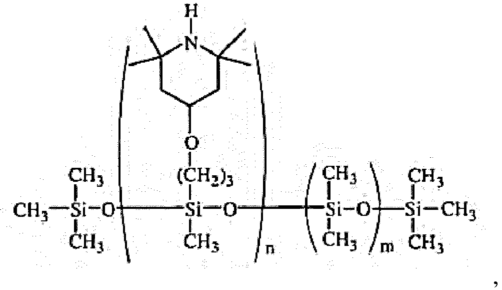 wherein m and n are integers which are independently form each other in a range from 2 to 10,000, preferably from 3 to 5,000 and particular preferred form 4 to 2,500. A preferred hydroxyl functional siloxane is described by one of the following structural formulas: 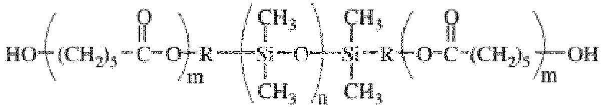 and 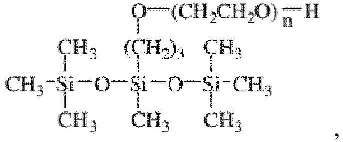 wherein m and n are integers which are independently form each other in a range from 2 to 10,000, preferably from 3 to 5,000 and particular preferred form 4 to 2,500. A preferred methacrylate functional siloxane is described by one of the following structural formulas: 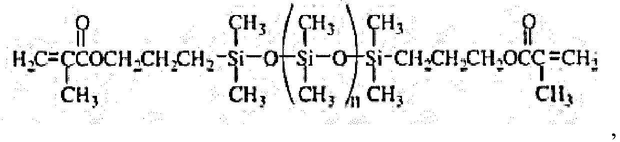 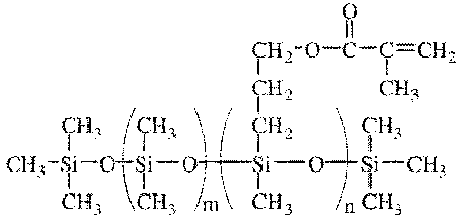 and 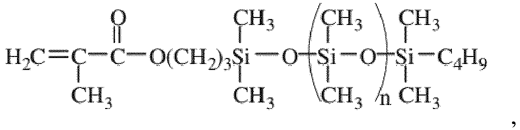 wherein m and n are integers which are independently form each other in a range from 2 to 10,000, preferably from 3 to 5,000 and particular preferred form 4 to 2,500. A preferred hydride functional siloxane is described by one of the following structural formulas: 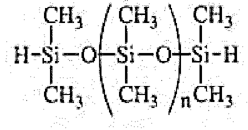 and 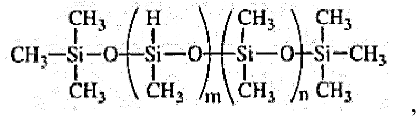 wherein m and n are integers which are independently form each other in a range from 2 to 10,000, preferably from 3 to 5,000 and particular preferred form 4 to 2,500.

### Depyrogenisation

Particularly preferably, the heating in the process step d) of the process 1 or the heating in the process step B) of the process 2 or both is a measure of a depyrogenisation step. In the technical field of pharamcy, depyrogenisation is a step of decreasing an amount of pyrogenic germs on a surface, preferably via a heat-treatment. Therein, the amount of pyrogenic germs on the surface is preferably decreased as much as possible, preferably by at least 80 %, more preferably at least 90 %, more preferably at least 95 %, even more preferably at least 99 %, even more preferably at least 99.5 %, most preferably by 100 %, in each case based on an amount of the pyrogenic germs on the surface prior to the depyrogenisation.

### Pharmaceutical composition

In the context of the invention, every pharmaceutical composition which the skilled person deems suitable comes into consideration. A pharmaceutical composition is a composition comprising at least one active ingredient. A preferred active ingredient is a vaccine. The pharmaceutical composition may be fluid or solid or both, wherein a fluid composition is particularly preferred herein. A preferred solid composition is granular such as a powder, a multitude of tablets or a multitude of capsules. A further preferred pharmaceutical composition is a par-enterialium, i.e. a composition which is intended to be administered via the parenteral route, which may be any route which is not enteral. Parenteral administration can be performed by injection, e.g. using a needle (usually a hypodermic needle) and a syringe, or by the insertion of an indwelling catheter.

### Wall

Herein, the wall of the hollow body comprises a layer of glass. The wall may comprise further layers on one or both sides of the layer of glass. The layer of glass, preferably extends laterally throughout the wall. This means that, preferably, each point on the wall surface lies on top of a point of the layer of glass. The hollow body is preferably a hollow body of glass. In any case, the layers of the wall are joined to one another. Two layers are joined to one another when their adhesion to one another goes beyond van der Waals attraction forces. Unless otherwise indicated, the layers in a layer sequence may follow one another indirectly, in other words with one or at least two intermediate layers, or directly, in other words without an intermediate layer. This is particularly the case with the formulation wherein one layer superimposes another layer. Further, if an entity (e.g. composition precursor, particles) is superimposed onto a layer or a surface, this entity may be contacted with that layer or surface or it may not be contacted with that layer or surface, but be indirectly overlaid onto that layer or surface with another entity (e.g. a layer) in-between.

### Alkali metal barrier layer and hydrophobic layer

Preferably, the layer of glass of the hollow body is superimposed by an alkali metal barrier layer or by a hydrophobic layer or both, in each case towards the interior volume of the hollow body. Preferably, the alkali metal barrier layer or by the hydrophobic layer or both form at least a part of the interior surface, preferably the full interior surface. The alkali metal barrier layer may consist of any material or any combination of materials which the skilled person deems suitable for providing a barrier action against migration of an alkali metal ion, preferably against any alkali metal ion. The alkali metal barrier layer may be of a multilayer structure. Preferably, the alkali metal barrier layer comprises SiO₂, preferably a layer of SiO₂. Further, the hydrophobic layer may consist of any material or any combination of materials which provides a layer surface towards the interior volume which has a contact angle for wetting with water of more than 90°. The hydrophobic layer preferably allows for the formation of a well-defined cake upon freeze-drying, in particular in terms of a shape of the cake. A preferred hydrophobic layer comprises a compound of the general formula SiOₓC_{y}H_{z}, preferably a layer of this compound. Therein, x is a number which is less than 1, preferably in a range from 0.6 to 0.9, more preferably from 0.7 to 0.8; y is a number in a range from 1.2 to 3.3, preferably from 1.5 to 2.5; and z is a number as well.

### Catalysing substance

Any material which the skilled person knows and which he deems appropriate for catalysing a crosslinking of the one or more siloxanes of the functionalising composition precursor or the functionalising composition comes may be applied for the purpose of the invention. Therein, the crosslinking, preferably, comprises an addition reaction or a hydrolysing reaction or both. Preferred catalysing substances are Pt and peroxides.

### MEASUREMENT METHODS

The following measurement methods are to be used in the context of the invention. Unless otherwise specified, the measurements have to be carried out at an ambient temperature of 23°C, an ambient air pressure of 100 kPa (0.986 atm) and a relative atmospheric humidity of 50 %.

### Contact angle for wetting with water

The contact angle of a surface for wetting with water is determined in accordance with the standard DIN 55660, parts 1 and 2. The contact angle is determined using the static method. Deviating from the standard, the measurement is conducted at curved surfaces as the wall of the hollow body is usually curved. Further, the measurements are conducted at 22 to 25 °C ambient temperature and 20 to 35 % relative atmospheric humidity. A Drop Shape Analyzer - DSA30S from Krüss GmbH is applied for the measurements. Uncertainty of the measurement increases for contact angles below 10°.

### Wall thickness and tolerance of wall thickness

The wall thickness and deviations from the mean value of the wall thickness (tolerance) are determined in accordance with the following standards for the respective type of hollow body:
DIN ISO 8362-1 for vials,
DIN ISO 9187-1 for ampoules,
DIN ISO 110 4 0- 4 for syringes,
DIN ISO 13926-1 for cylindrical cartridges, and
DIN ISO 11040-1 for dental cartridges.

### Transmission coefficient

Herein, the transmission coefficients are defined as T = Iₜᵣₐₙₛ / I₀, wherein I₀ is the intensity of the light which is incident at a right angle on an incidence region of the surface region and Iₜᵣₐₙₛ is the intensity of the light which leaves the hollow body on a side of the hollow body which is opposite to the incidence region. Hence, T refers to light which transmits the empty hollow body completely, i.e. one time through the wall into the emtpy interior volume and from there a second time through the wall out of the interior volume. Hence, the light transmits through two curved sections of the wall of the hollow body. The transmission coefficient is determined in accordance with the standard ISO 15368:2001(E), wherein an area of measurement of the dimensions 3 mm × 4 mm is used. Further, the light is incident on the hollow body at a right angle to the vertical extension of the exterior surface of the hollow body. Preferably, the transmission coefficients herein refer to a hollow body of the type 2R according to DIN/ISO 8362 and to a transmission of the light through a part of the hollow body which is of the shape of a hollow cylinder.

### Haze

The haze is a measure for the opacity of a transparent sample, such as a glass sample. The value of the haze represents the fraction of light which has been transmitted through the sample, here the empty container, and which is scattered out of a certain spatial angle around the optical axis. Thus, the haze quantifies material defects in the sample which negatively affect transparency. Herein, the haze is determined according to the standard ASTM D 1033. In accordance with this standard, 4 spectra are measured and for each of them the transmission coefficient is calculated. The haze value in % is calculated from these coefficients of transmission. A Thermo Scientific Evolution 600 spectrometer with integrating sphere and the software OptLab-SPX are applied for the measurements. In order to allow for measuring the diffusive transmission, the sample is positioned in front of the entrance of the integrating sphere. The reflection opening is left empty such that only the transmitted and scattered fraction of the incident light is detected. The fraction of the transmitted light which is not sufficiently scattered is not detected. Further measurements pertain to detection of the scattered light in the sphere (without sample) and to the overall transmission of the sample (reflection opening closed). All the measurement results are normalised to the overall transmission of the sphere without sample which is implemented as obligatory baseline correction in the software. Herein, the haze refers to light which transmits the hollow body completely, i.e. one time through the wall into the interior volume and from there a second time through the wall out of the interior volume. Hence, the light transmits through two curved sections of the wall of the hollow body. Further, the light is incident on the hollow body at a right angle to the vertical extension of the exterior surface of the hollow body. The hollow body, preferably, is a vial of the type 2R according to DIN/ISO 8362 and the transmission is conducted through a part of the hollow body which is of the shape of a hollow cylinder.

### Catalysing substance

The catalysing substance is detected via Secondary Neutral Mass Spectrometry (SNMS). This method is particularly suitable for detecting small amounts of Pt of a catalysing substance. For the post-ionisation a VUV-laser system (Excimer-Laser LPF 220 from Coherent Inc.) is used. Accordingly, laser light at a wavelength of 157 nm, a photon energy of 7.9 eV, a maximum pulse energy of 30 mJ, a pulse length of 17 ns and a maximum power density of 1.4·10⁸ W/cm² is used. The surface area which is tested is at least 50 up to 500 µm² large. The duration of measurement is at least 100 s, but not more than 5 min.

### Viscosity

The viscosity of the functionalising composition precursor is determined using a Brookfield Digital-Rheometer. Further, a DIN-Adapter 86 is used. The sample to be tested is positioned in a narrow gap between an inner and an outer cylinder. One of the two cylinders (DIN Adapter 86) is driven by a motor, the other remains coaxially fixed. In the narrow annular gap between the wall and the rotating body, the viscous liquid is sheared and thereby breaks the movement of the rotating body, which can be detected as a measuring signal by various means. During rotation of the rotating body, the shear stress is then measured given a defined velocity gradient (constant rotational speed). The viscosity of the liquid can then be determined from the values read and from the exact geometry of the rotating body used (DIN Adapter 86). The viscosity is determined under laminar conditions, not under turbulent conditions. For accurate measurements, the temperature is controlled. All measurements are conducted at 24 °C.

### Scratch test and coefficient of dry sliding friction

An MCT MikroCombiTester (MCT S/N 01-04488) from CSM Instruments is applied for the scratch test and for measuring the coefficient of dry friction. As the friction partner, a hollow body which is identical to the hollow body to be tested, including any coatings or functionalisations, is used. Further, in the test same surfaces are scratched / slide against each other. The friction partner is hold in position by a special mount above the hollow body to be tested. Here, the friction partner and the hollow body to be tested incline an angle of 90° in a top view. For both measurements, the hollow body to be tested is moved forwards, thereby scratching over the surface of the friction partner at a well-defined force. For both tests, the hollow body to be measured is moved forwards underneath the friction partner at a velocity of 10 mm/min over a test length of 15 mm. In case of the scratch test, the test force is progressively increased from 0 to 30 N (load rate 19.99 N/min) across the test length. Afterwards, the scratched surface is checked with a microscope at a magnification of 5 times. In case of measuring the coefficient of dry sliding friction, a constant test force of 0.5 N is applied. The coefficient of dry friction is determined from the measured values, wherein only values after the initial 0.2 mm up to the full test length of 15 mm are considered, in order to minimise the influence of the static friction.

The invention is set out in more detail below by means of examples and drawings, with the examples and drawings not denoting any restriction on the invention. Furthermore, unless otherwise indicated, the drawings are not to scale.

### Example 1 (according to the invention)

### Preparation of functionalising emulsion:

181.20 g of high purity water (water for injection) are provided in a beaker. 28.80 g of DC366 (Dimethicone NF Emulsion 35 %) from Dow Corning are added to the beaker and the obtained composition is stirred for 1 h with a magnetic stirrer at ambient temperature of 20 °C. The thus obtained emulsion is ready for use.

### Functionalisation with emulsion:

A commercially available glass vial of the type "Vial 2.00 ml Fiolax clear" from Schott AG, which is further of the type 2R according to DIN/ISO 8362, is provided. The surface of this vial does not have any coating or functionalisation. This vial is washed as described below. The washed vial is immersed with its bottom first into the functionalising emulsion, which has been prepared as set out above, at a velocity of 20 cm/min. Therein, the head region of the vial, including the vial opening, is not immersed into the emulsion in order to prevent contacting the interior surface of the vial with the emulsion. The vial is kept in the composition for 1 s. Afterwards, the vial is retracted from the emulsion at a velocity of 10 cm/min. Subsequently, the vial is kept as it is for 10 s at ambient temperature of 20 °C. Then the vial is placed with its bottom onto an absorbent substrate such as a paper towel. Then the functionalising emulsion which has been applied to the vial is cured by treating the solution for 10 s with a plasma. This plasma is obtained from a gas using a low-pressure plasma system of the type Nano from Diener electronic GmbH + Co. KG, Ebhausen, Germany. The system is operated at a constant frequency of 13.56 MHz and at 150 W. The gas consists of 15 vol.-% of O₂ and 85 vol.-% of Ar. Further, the plasma has a temperature of 25 °C and a pressure of 5 mbar. Accordingly, the glass vial is not heated above 25 °C for the functionalisation procedure. The DC366, which is used for functionalising, comprises a catalyst which supports curing of the functionalisation emulsion.

### Example 2 (according to the invention)

### Preparation of functionalising emulsion:

181.20 g of high purity water (water for injection) are provided in a beaker. 28.80 g of MED-361 from NuSil are added to the beaker and the obtained composition is stirred for 1 h with a magnetic stirrer at ambient temperature of 20 °C. The thus obtained emulsion is ready for use.

### Functionalisation with emulsion:

A commercially available glass vial of the type "Vial 2.00 ml Fiolax clear" from Schott AG, which is further of the type 2R according to DIN/ISO 8362, is provided. The surface of this vial does not have any coating or functionalisation. This vial is washed as described below. The washed vial is immersed with its bottom first into the functionalising emulsion, which has been prepared as set out above, at a velocity of 30 cm/min. Therein, the head region of the vial, including the vial opening, is not immersed into the emulsion in order to prevent contacting the interior surface of the vial with the emulsion. The vial is kept in the composition for 1 s. Afterwards, the vial is retracted from the emulsion at a velocity of 20 cm/min. Subsequently, the vial is kept as it is for 10 s at ambient temperature of 20 °C. Then the vial is placed with its bottom onto an absorbent substrate such as a paper towel. Then the functionalising emulsion which has been applied to the vial is cured by treating the emulsion for 20 s with a plasma. This plasma is obtained from a gas using the low-pressure plasma system of the type Nano from Diener electronic GmbH + Co. KG, Ebhausen, Germany. The system is operated at a constant frequency of 13.56 MHz and at 200 W. The gas consists of 10 vol.-% of O₂ and 90 vol.-% of Ar. Further, the plasma has a temperature of 30 °C and a pressure of 10 mbar. Accordingly, the glass vial is not heated above 30 °C for the functionalisation procedure. The MED-36 comprises a catalyst which supports curing of the functionalisation emulsion.

### Example 3 (according to the invention)

### Preparation of functionalising emulsion:

181.20 g of high purity water (water for injection) are provided in a beaker. 15 g of MED-6670 A and 15 g of MED-6670 B, both from NuSil, are added to the beaker and the obtained composition is stirred for 1 h with a magnetic stirrer at ambient temperature of 20 °C. The thus obtained emulsion is ready for use.

### Functionalisation with emulsion:

A commercially available glass vial of the type "Vial 2.00 ml Fiolax clear" from Schott AG, which is further of the type 2R according to DIN/ISO 8362, is provided. The surface of this vial does not have any coating or functionalisation. This vial is washed as described below. The washed vial is immersed with its bottom first into the functionalising emulsion which has been prepared as set out above, at a velocity of 30 cm/min. Therein, the head region of the vial, including the vial opening, is not immersed into the emulsion in order to prevent contacting the interior surface of the vial with the emulsion. The vial is kept in the composition for 1 s. Afterwards, the vial is retracted from the emulsion at a velocity of 10 cm/min. Subsequently, the vial is kept as it is for 10 s at ambient temperature of 20 °C. Then the vial is placed with its bottom onto an absorbent substrate such as a paper towel. Then the functionalising emulsion which has been applied to the vial is cured by treating the solution for 30 s with a plasma.
This plasma is obtained from a gas using the low-pressure plasma system of the type Nano from Diener electronic GmbH + Co. KG, Ebhausen, Germany. The system is operated at a constant frequency of 13.56 MHz and at 100 W. The gas consists of 20 vol.-% of O₂ and 80 vol.-% of Ar. Further, the plasma has a temperature of 35 °C and a pressure of 15 mbar. Accordingly, the glass vial is not heated above 35 °C for the functionalisation procedure. The MED-6670 A and MED-6670 B comprise a catalyst which supports curing of the functionalisation emulsion.

### Comparative Example 1 (not according to the invention)

A commercially available glass vial of the type "Vial 2.00 ml Fiolax clear" from Schott AG, which is further of the type 2R according to DIN/ISO 8362, is provided and used as reference. The surface of this vial does not have any coating or functionalisation.

### Comparative Example 2 (not according to the invention)

A commercially available glass vial of the type "Vial 2.00 ml Fiolax clear" from Schott AG, which is further of the type 2R according to DIN/ISO 8362, and which has been washed as described below is coated on its exterior surface with MED10-6670 from NuSiL. The coated vial is dried for 10 min at 350 °C in an oven. No plasma treatment is applied.

### Comparative Example 3 (not according to the invention)

A glass vial of the type 2R according to DIN/ISO 8362 is washed as described below and then coated on its exterior surface with polyimide. No plasma treatment is applied. Instead, curing is conducted in an oven for 30 minutes at 300 °C.

### Evaluation

For each of the examples 1 to 3 and the comparative examples 1 to 3, the contact angle for wetting with water and the coefficient of dry sliding friction are determined on the exterior surface of the vial body in accordance with the above measurement methods, respectively. The results are shown in Table 1.

**Table 1: Characterisation of the exterior surfaces of the glass vials of the examples and comparative examples by their contact angles for wetting with water and coefficients of dry sliding friction, in each case prior to any post treatment**

| **Example** | **Contact angle for water [°]** | **Coefficient of dry sliding friction** |
|---|---|---|
| Example 1 | 105 | 0.06 |
| Example 2 | 99 | 0.01 |
| Example 3 | 77 | 0.28 |
| Comparative example 1 | < 10 | 0.5 |
| Comparative example 2 | 70 | 0.28 |
| Comparative example 3 | 72 | 0.16 |

Further, 10,000 of the vials of each example and comparative example, respectively, are processed on a standard pharmaceutical filling line and thus, filled with an influenza vaccine. Table 2 below shows an evaluation of the vials regarding their tendency to being damaged or even break on the filling line. Here, ++ means that no or only very few vials are being damaged or broken, + means that few vials are being damaged or broken, - means that damages to vials and broken vials occur more often than for +, -- means that damages to vials and broken vials occur more often than for -. Further, the maximum temperature of the glass vials during functionalisation and the duration of the curing procedure of the composition for functionalisation are summarised for the examples and comparative examples in the Table 2.

**Table 2: Comparison of the tendency of the glass vials to be damaged on the filling line, the maximum temperature of the glass vials during functionalisation and the duration of the curing procedure of the composition for functionalisation, each for the examples and comparative examples**

| **Example** | **Low tendency to damages on filling line** | **Maximum temperature of glass vial during functionalisation [°C]** | **Duration of curing of the composition for functionalisation** |
|---|---|---|---|
| Example 1 | ++ | 25 | 10 s |
| Example 2 | ++ | 30 | 20 s |
| Example 3 | + | 35 | 30 s |
| Comparative example 1 | -- | / | 0 s |
| Comparative example 2 | - | 350 | 10 min |
| Comparative example 3 | - | 300 | 30 min |

It can be concluded from the results presented in Table 2 that only the inventive examples provide glass vials with a low tendency to be damaged or broken on the filling line by rather short low-temperature processes. This makes these processes particularly suitable for functionalising glass containers which include heat-sensitive components, such as a syringe which has a hypodermic needle glued into its tip. Such a syringe cannot be functionalised by any of the processes of the comparative examples 2 and 3 without damaging the syringe. Further in comparison to the processes of the comparative examples 2 and 3 which include thermal curing steps, the inventive processes of the examples 1 to 3 are particularly suitable for functionalising nonplanar, 3D-bodies because the plasma treatment results in a comparably fast immobilisation of the siloxanes which are thus, stopped from flowing. In consequence, a tendency to contaminate the container interior is lower for the processes of the examples 1 to 3. In addition, the functionalised surface shows a more uniform coefficient of dry sliding friction across its area.

Further, the vials of the examples and comparative examples are studied for their optical characteristics which may influence an optical inspection of the vials, in particular for pharmaceutically relevant particles, after being filled with a vaccine and being closed. These studies are conducted prior to filling the vials. Here, the increase of the haze by the functionalisation / coating and the transmission coefficient (T) of the vials for blue light of wavelength 450 nm are determined in accordance with the above measurement methods. The results are provided in the Table 3 below. Column 2 shows the increase of the haze by the functionalisation / coating with respect to the untreated vial which corresponds to comparative example 1.

**Table 3: Optical characteristics of the vials of the examples and the comparative examples**

| **Example** | **Increase of haze [%]** | **T at 450 nm** |
|---|---|---|
| Example 1 | < 0.3 | 0.85 |
| Example 2 | < 0.3 | 0.85 |
| Example 3 | < 0.3 | 0.85 |
| Comparative example 1 | / | 0.85 |
| Comparative example 2 | 6 | 0.86 |
| Comparative example 3 | 3 | 0.74 |

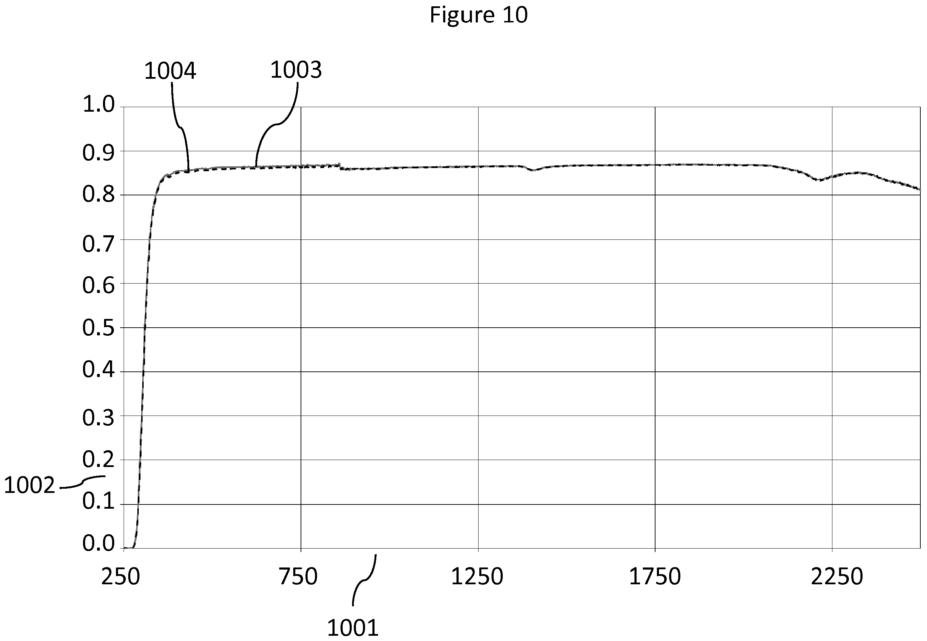

In addition to Table 3, figure 10 shows the transmission coefficients of the empty vials of the examples 1 to 3 after functionalisation and of empty vials of comparative example 1 as reference across a broad spectral range. From this figure, it can clearly be seen that the functionalisation measures according to the examples 1 to 3 do not significantly deteriorate the transmission coefficient in the studied spectral range.

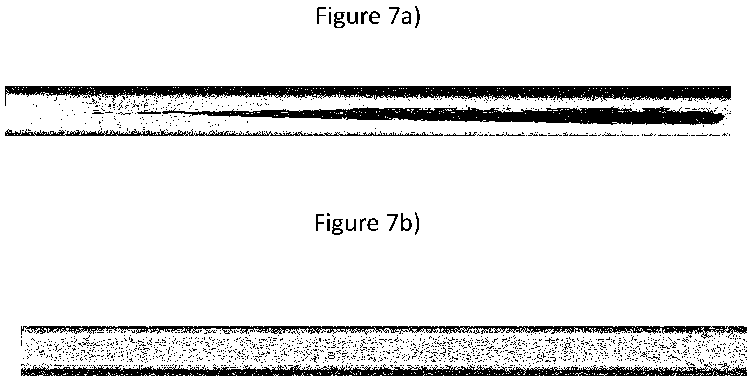

For further studies, functionalised surfaces of vials according to the example 1 and unfunctionalised surfaces of vials according the comparative example 1 have been subjected to a scratch test which is described in detail in the above measurement methods section. Typical results of these tests are shown in the figures 7a) and b). Therein, figure 7a) shows an unfunctionalised surface of a vial according to comparative example 1 after having been subjected to the scratch test. Figure 7b) shows a functionalised vial surface according to example 1 after having been subjected to the scratch test. In these figures, the test force with which the friction partner is pushed against the vial surface is increased linearly from 0.1 N (at the left margins of the figures) up to 30 N (at the right margins of the figures). As the figure 7a) and b) show typical results of the scratch test studies, it can be concluded that the scratch resistance of the vial surfaces which have been functionalised according to the invention have been greatly improved with respect to the unfunctionalised reference vial.

### Post-treatment

For further studies, vials of the example 1 and of the comparative example 1 as reference are subjected to three different kinds of post-treatment, i.e. a washing procedure, a depyrogenisation procedure and a freeze drying. These kinds of post-treatment are described below. The washing procedure is the same as used prior to functionalising / coating the vials in the examples 1 to 3 and of the comparative examples 1 and 2.

### Washing:

A HAMO LS 2000 washing machine is applied for the washing procedure. The HAMO LS 2000 is connected to the purified water supply. Further, the following devices are used.
cage 1: 144 with 4 mm nozzles
cage 2: 252 with 4 mm nozzles
drying cabinet from Heraeus (adjustable up to 300 °C)

The tap is opened. Then the machine is started via the main switch. After conducting an internal check, the washing machine shows to be ready on the display. Program 47 is a standard cleaning-program which operates with the following parameters:
pre-washing without heating for 2 min
washing at 40 °C for 6 min
pre-rinsing without heating for 5 min
rinsing without heating for 10 min
end-rinsing at without heating for 10 min
drying without heating for 5 min

The holder for the vials in the cages 1 and 2 have to be adjusted considering the size of the vials in order to obtain a distance of the nozzle of about 1.5 cm. The vials to be washed are placed on the nozzles with the head first. Subsequently, the stainless steel mesh is fixed on the cage. The cage is oriented to the left and pushed into the machine. Then the machine is closed. Program 47 (GLAS040102) is selected and then the HAMO is started via START. After the program has finished (1 h), the cages are taken out and the vials are placed with their opening facing downwards in drying cages. A convection drying cabinet with ambient air filter is applied for the drying. The drying cabinet is adjusted to 300 °C. The vials are placed into the drying cabinet for 20 min. After the vials have cooled down, they are sorted into appropriate boxes.

### Depyrogenisation:

The vials are depyrogenised by placing them in an oven which is heated to 350 °C. This temperature is kept constant for 1 h. Subsequently, the vials are taken out of the oven and left to cool down.

### Freeze drying:

The vials are freeze dried by storing them for 4 hours at -70 °C.

### Evaluation after post-treatment

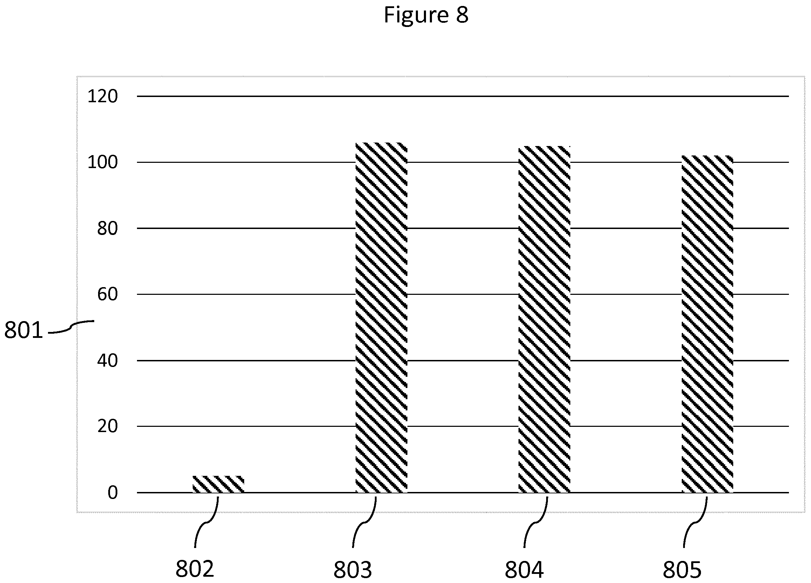

Vials of the example 1 have been subjected either to the above washing procedure or to the depyrogenisation procedure. Afterwards, the contact angle for wetting with water of the exterior surfaces of the vials in their tubular body regions have been measured. The results are shown in figure 8. This figure compares, from left to right, the contact angle of vials of comparative example 1 (without any post treatment), of example 1 without post-treatment, of example 1 after depyrogenisation, and of example 1 after washing. It is demonstrated that the functionalisation of example 1 withstands the washing procedure as well as the depyrogenisation procedure very well.

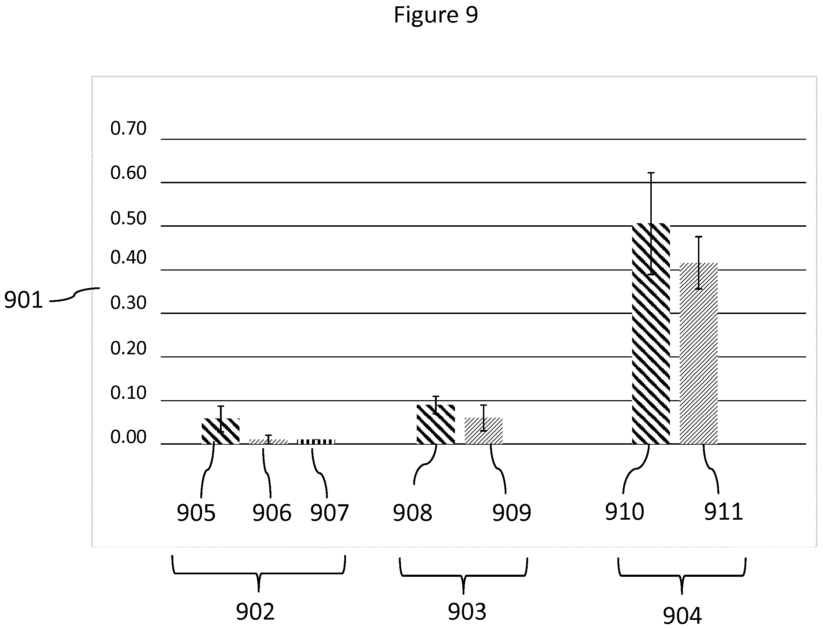

Further, vials according to example 1 and according the comparative example 1 have been further studied for their coefficient of dry sliding friction. In particle, the preceding coefficient has been measured without any post-treatment, after depyrogenisation and after freeze drying the vials. The results for vials of example 1 can be seen in the left-hand part of figure 9. The results, show that the coefficient is not increased by any of the two kinds of post-treatment, rather it is decreased even further. In conclusion, the functionalisation withstands both of the applied post-treatments. For further studies, vials according to example 1 have been washed as described above. Then the washed vials have been studied for their coefficients of dry sliding friction without further post-treatment and after depyrogenisation. The results are shown in the middle part of figure 9. It can ben seen that the functionalisation according to the invention even withstands a combination of washing and depyrogenisation very well. As a reference, vials of comparative example 1 have been washed as described above. The right-hand part of figure 9 shows measurement results of the coefficients of dry sliding friction without further post-treatment and after depyrogenisation.

As shown in figures 8 and 9, the functionalisation according to the invention withstands a washing procedure, depyrogenisation as well as freeze drying, all of which are procedures which are typically used for treating pharmaceutical vials. Further studies have shown that the interior surfaces of vials which have been functionalised on their exterior surface according to the invention are not contaminated by the functionalisation composition due to the washing procedure.

Even further tests have been conducted, in that vials which have been functionalised on their exterior surfaces according to the invention have been freeze dried as set out above. Prior to and after this procedure the functionalised surfaces have been checked for damages and defects under an optical microscope at a magnification of 5 to 20 times. It has been observed that no defects or damages have been caused to the functionalised surface by the freeze drying procedure.

Unless otherwise specified in the description or the particular figure:
- Figure 1: shows a flow chart of a process according to the invention for making a functionalised hollow body;
- Figure 2: shows a flow chart of a further process according to the invention for making a functionalised hollow body;
- Figure 3: shows a schematic depiction of a hollow body according to the invention;
- Figure 4: shows a schematic depiction of a closed hollow body according to the invention;
- Figure 5: shows a flow chart of a process according to the invention for packaging a pharmaceutical composition;
- Figure 6: shows a flow chart of a process according to the invention for treating a patient;
- Figure 7a): shows a microscope image of the result of a scratch test performed on a vial of comparative example 1;
- Figure 7b): shows a microscope image of the result of a scratch test performed on a vial of example 1;
- Figure 8: shows a diagram with results of measurements of the contact angle for wetting with water of vials of example 1 and comparative example 1;
- Figure 9: shows a diagram with results of measurements of the coefficient of dry sliding friction of vials of example 1 and comparative example 1; and
- Figure 10: shows results of measurements of the transmission coefficient of vials according to the example 1 and the comparative example 1.

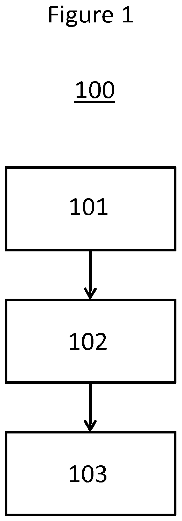

Figure 1 shows a flow chart of a process 100 according to the invention for making a functionalised hollow body 300. The process 100 comprises a process step a) 101 in which a commercially available glass vial of the type "Vial 2.00 ml Fiolax clear" from Schott AG, which is further of the type 2R according to DIN/ISO 8362, is provided. A process step b) 102 of partially superimposing a layer of glass 304 of the vial with a functionalising emulsion is conducted as described above for example 1. Also the subsequent process step c) 103 of at least partially contacting the functionalising emulsion - as functionalising composition precursor - with a plasma is conducted as described in the context of example 1. Thereby, the functionalised hollow body 300 is obtained. In particular, a functionalising composition 305 is obtained from the functionalising emulsion via at least partially crosslinking the siloxanes in the emulsion.

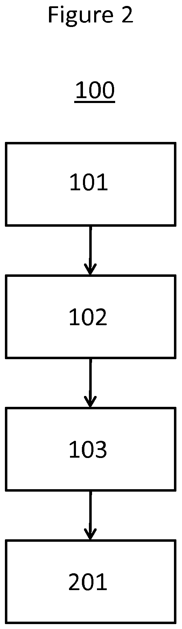

Figure 2 shows a flow chart of a further process 100 according to the invention for making a functionalised hollow body 300. The process 100 of figure 2 comprises the process steps a) 101 to c) 103 of the process 100 according to figure 1 and further, a process step d) 201 of depyrogenising the functionalised hollow body 300 in accordance with the above described depyrogenisation process.

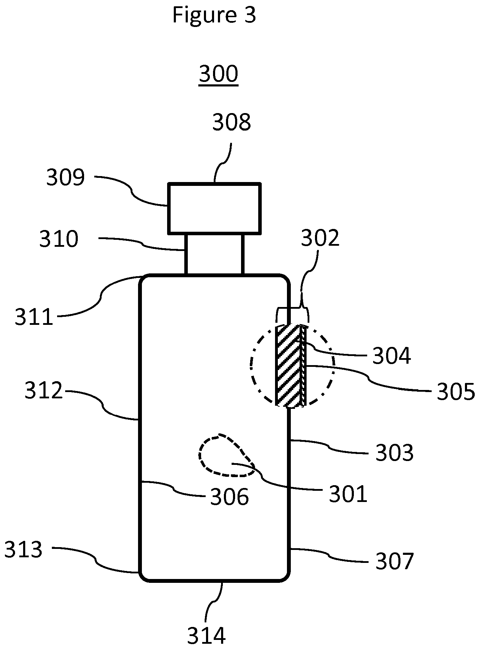

Figure 3 shows a schematic depiction of a hollow body 300 according to the invention. The hollow body 300 comprises a wall 302 which partially surrounds an interior volume 301 of the hollow body 300. The wall 302 surrounds the interior volume 301 only partially in that the hollow body 300 comprises an opening 308. The wall 302 forms from top to bottom in the figure 3: a top region of the hollow body 300, which consists of a flange 309 and a neck 310; a body region 312, which follows the top region via a shoulder 311; and a bottom region 314, which follows the body region 312 via a heel 313. Here, the body region 312 is a lateral region of the hollow body 300 in form of a hollow cylinder. The wall 302 comprises a layer of glass 304 and a wall surface 303, wherein the layer of glass 304 extends across the full area of the wall surface 303. The wall surface 303 consists of an interior surface 306 which faces the interior volume 301, and an exterior surface 307 which faces away from the interior volume 301. Throughout the body region 312, a functionalising composition 305 adjoins the layer of glass 304 on a side of the layer of glass 304 which faces away from the interior volume 301. The functionalising composition 305 comprises 99.95 wt.-% of one or more siloxanes, and 0.05 wt.-% of a catalysing substance which is suitable for catalysing a crosslinking of the one or more siloxanes, the wt.-% being based on the weight of the functionalising composition 305. Here, the functionalising composition 305 is covalently bonded to the layer of glass 304 via Si-O-bonds. Further, the siloxanes of the functionalising composition 305 are at least partially crosslinked. Further, the catalysing substance is based on platinum. The hollow body 100 is a vial for packaging a pharmaceutical composition 401 (not shown). Further, the hollow body 300 shown in figure 3 is a functionalised hollow body 300 which is obtainable by a process 100 according to the invention.

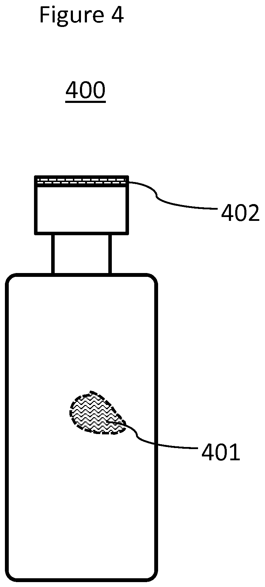

Figure 4 shows a schematic depiction of a closed hollow body 400 according to the invention. This closed hollow body 400 is obtainable by filling the hollow body 300 of figure 3 with a pharmaceutical composition 401 and closing the opening 308 with a lid 402. Here, the pharmaceutical composition 401 is a vaccine.

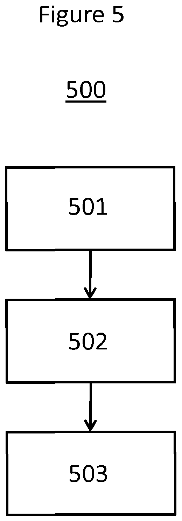

Figure 5 shows a flow chart of a process according to the invention for packaging a pharmaceutical composition. In a process step A) 501, the hollow body 300 according to figure 3 is provided. In a process step B) 502, a pharmaceutical composition 401 is filled into the interior volume 301 of the hollow body 300, and in a process step C) 503 the opening 308 of the hollow body 300 is closed, thereby obtaining the closed hollow body 400 of figure 4.

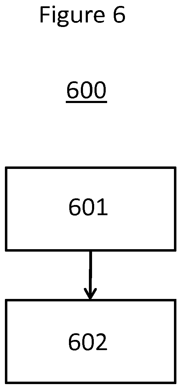

Figure 6 shows a flow chart of a process 600 according to the invention for treating a patient. This process 600 comprises the process steps of: A. 601 providing the closed hollow body 400 of figure 4, opening the closed hollow body 400 by penetrating the lid 402 with a needle of a syringe, filling the syringe with the vaccine; and B. 602 administering the vaccine subcutaneously to a patient using the syringe.

Figure 7a) shows a microscope image of the result of a scratch test performed on a vial of comparative example 1. In the figure, the applied force increases linearly from 0.1 N on the left-hand margin to 30 N on the right-hand margin.

Figure 7b) shows a microscope image of the result of a scratch test performed on a vial of example 1. In the figure, the applied force increases linearly from 0.1 N on the left-hand margin to 30 N on the right-hand margin.

Figure 8 shows a diagram with results of measurements of the contact angle for wetting with water 800 of vials of example 1 and comparative example 1. The bar 802 shows the measurement results for vials according to comparative example 1 without any post-treatment which is used as a reference. Bar 803 shows the results for vials of example 1 without post-treatment, bar 804 for vials of example 1 after depyrogenisation, and bar 805 for vials of example 1 after the washing procedure.

Figure 9 shows a diagram with results of measurements of the coefficient of dry sliding friction 901 of vials of example 1 and comparative example 1. In the left-hand part 902 of the figure, bar 905 shows the coefficient of dry sliding friction 901 of vials according to example 1 without post-treatment, bar 906 after depyrogenisation, and bar 907 after freeze drying. In the middle part 903 of the figure, bar 908 shows the coefficient of dry sliding friction 901 of vials according to example 1 after washing without further post-treatment, and bar 909 after washing and depyrogenisation. In the right-hand part 902 of the figure, bar 910 shows the coefficient of dry sliding friction 901 of vials according to comparative example 1 after washing without further post-treatment, and bar 911 after washing and depyrogenisation.

Figure 10 shows results of measurements of the transmission coefficient 1002 of vials according to the example 1 and the comparative example 1 over the wavelength in nm 1001. In the diagram, 1003 denotes the measurement results for the example 1 and 1004 denotes the results for comparative example 1. All these results are so close to each other that the corresponding graphs appear practically as one in the diagram. The dip at 865 nm is a measurement artefact.

### LIST OF REFERENCE NUMERALS

- **100**: process according to the invention for making a hollow body
- **101**: process step a)
- **102**: process step b)
- **103**: process step c)
- **201**: process step d)
- **300**: hollow body / functionalised hollow body according to the invention
- **301**: interior volume
- **302**: wall
- **303**: wall surface
- **304**: layer of glass
- **305**: functionalising composition
- **306**: interior surface
- **307**: exterior surface
- **308**: opening
- **309**: flange
- **310**: neck
- **311**: shoulder
- **312**: body region
- **313**: heel
- **314**: bottom region
- **400**: closed hollow body according to the invention
- **401**: pharmaceutical composition
- **402**: lid
- **500**: process according to the invention for packaging a pharmaceutical composition
- **501**: process step A)
- **502**: process step B)
- **503**: process step C)
- **600**: process according to the invention for treating a patient
- **601**: process step A.
- **602**: process step B.
- **801**: contact angle for wetting with water in °
- **802**: vials of comparative example 1 without post-treatment
- **803**: vials of example 1 without post-treatment
- **804**: vials of example 1 after depyrogenisation
- **805**: vials of example 1 after washing procedure
- **901**: coefficient of dry sliding friction
- **902**: left-hand part (measurement results for example 1)
- **903**: middle part (measurement results for example 1 after washing)
- **904**: right-hand part (measurement results for comparative example 1 after washing)
- **905**: measurement results for example 1 without further post-treatment
- **906**: measurement results for example 1 after depyrogenisation
- **907**: measurement results for example 1 after freeze drying
- **908**: measurement results for example 1 after washing without further post-treatment
- **909**: measurement results for example 1 after washing and depyrogenisation
- **910**: measurement results for comparative example 1 after washing without further post-treatment
- **911**: measurement results for comparative example 1 after washing and depyrogenisation
- **1001**: wavelength in nm
- **1002**: transmission coefficient
- **1003**: measurement results for example 1
- **1004**: measurement results for comparative example 1

## Claims

1. A process (100) for making a functionalised hollow body (300), the process (100) comprising as process steps
a) providing a hollow body, comprising a wall (302) which at least partially surrounds an interior volume (301) of the hollow body, wherein the wall (302)
i) comprises a layer of glass (304), and
ii) has a wall surface (303), comprising a surface region;
b) at least partially superimposing the layer of glass (304) in the surface region with a functionalising composition precursor on a side of the layer of glass (304) which faces away from the interior volume (301),
wherein the functionalising composition precursor comprises one or more siloxanes; and
c) at least partially contacting the functionalising composition precursor with a plasma, thereby obtaining the functionalised hollow body (300), comprising a functionalising composition (305) which at least partially superimposes the layer of glass (304) in the surface region on the side of the layer of glass (304) which faces away from the interior volume (301).

2. The process (100) according to claim 1, wherein the plasma is obtainable from a plasma precursor which comprises one selected from the group consisting of Ar, N₂, O₂, and air; or a combination of at least two thereof.

3. The process (100) according to claim 1 or 2, wherein the functionalising composition precursor comprises the one or more siloxanes in total at a proportion in a range from 1 to 50 wt.-%, based on the total weight of the functionalising composition precursor.

4. The process (100) according to any of the preceding claims, wherein the functionalising composition precursor further comprises a vehicle at a proportion in a range from 45 to 99 wt.-%, based on the total weight of the functionalising composition precursor.

5. The process (100) according to any of the preceding claims, wherein at least one of the one or more siloxanes is a polyalkylsiloxane.

6. The process (100) according to any of the preceding claims, wherein in the process step c) obtaining the functionalising composition (305) from the functionalising composition precursor comprises a crosslinking of the one or more siloxanes, or a forming of Si-O-bonds to the wall surface (303) in the surface region, or both.

7. The process (100) according to any of the preceding claims, wherein the hollow body is a container.

8. The process (100) according to claim 7, wherein the container is a packaging container for a medical or a pharmaceutical packaging good or both.

9. A functionalised hollow body (300) obtainable by the process (100) according to any of the preceding claims.

10. A hollow body (300), comprising a wall (302) which at least partially surrounds an interior volume (301) of the hollow body (300);
wherein the wall (302)
a) comprises a layer of glass (304), and
b) has a wall surface (303), comprising a surface region;
wherein at least in the surface region the layer of glass (304) is superimposed by a functionalising composition (305) on a side of the layer of glass (304) which is facing away from the interior volume (301);
wherein the functionalising composition (305) comprises
A. one or more siloxanes, and
B. a catalysing substance which is suitable for catalysing a crosslinking of the one or more siloxanes.

11. The hollow body (300) according to claim 10, wherein the wall surface (303) comprises
a. an interior surface (306) which faces the interior volume (301), and
b. an exterior surface (307) which faces away from the interior volume (301); wherein the exterior surface (307) comprises the surface region.

12. The hollow body (300) according to claim 10 or 11, wherein the functionalising composition (305) comprises the catalysing substance at a proportion in a range from more than 0 up to less than 1 wt.-%, based on the functionalising composition (305).

13. The hollow body (300) according to any of the claims 10 to 12, wherein the catalysing substance comprises Pt or a peroxide or both.

14. A closed hollow body (400), comprising a wall (302) which at least partially surrounds an interior volume (301) which comprises a pharmaceutical composition (401); wherein the wall (302)
a) comprises a layer of glass (304), and
b) has a wall surface (303), comprising a surface region;
wherein at least in the surface region the layer of glass (304) is superimposed by a functionalising composition (305) on a side of the layer of glass (304) which is facing away from the interior volume (301);
wherein the functionalising composition (305)comprises
A. one or more siloxanes, and
B. a catalysing substance which is suitable for catalysing a crosslinking of the one or more siloxanes.

15. A process (500), comprising as process steps
A) providing the functionalised hollow body (300) according to claim 9, or the hollow body (300) according to any of the claims 11 to 13;
B) inserting a pharmaceutical composition (401) into the interior volume (301); and
C) closing the hollow body (300).

16. A closed hollow body (400) obtainable by the process (500) according to claim 15.

17. A use of the functionalised hollow body (300) according to claim 9, or of the hollow body (300) according to any of the claims 10 to 13, each for packaging a pharmaceutical composition (401).

18. A use of an emulsion, comprising a siloxane, for functionalising at least a part of an exterior surface (307) of a wall (302) of a container,
wherein the wall comprises a layer of glass (304).

19. A use of a gas for creating a plasma for at least partially contacting a functionalising composition precursor, comprising a siloxane, which is superimposed on an exterior surface (307) of a wall (302) of a container,
wherein the wall comprises a layer of glass (304).

20. A use of a plasma for at least partially contacting a functionalising composition precursor, comprising a siloxane, wherein the functionalising composition precursor is superimposed on an exterior surface (307) of a wall (302) of a container,
wherein the wall (302) comprises a layer of glass (304).

## Patentansprüche

1. Ein Verfahren (100) zur Herstellung eines funktionalisierten Hohlkörpers (300), wobei das Verfahren (100) als Verfahrensschritte umfasst
a) Bereitstellen eines Hohlkörpers, der eine Wand (302) aufweist, die zumindest teilweise ein Innenvolumen (301) des Hohlkörpers umgibt, wobei die Wand (302)
i) eine Schicht aus Glas (304) umfasst, und
ii) hat eine Wandfläche (303), die einen Oberflächenbereich umfasst;
b) zumindest teilweises Überlagern der Glasschicht (304) im Oberflächenbereich mit einem funktionalisierenden Zusammensetzungsvorläufer auf einer Seite der Glasschicht (304), die dem Innenvolumen (301) abgewandt ist,
wobei der Vorläufer der funktionalisierenden Zusammensetzung ein oder mehrere Siloxane umfasst; und
c) zumindest teilweises Inkontaktbringen des Vorläufers der Funktionalisierungszusammensetzung mit einem Plasma, wodurch der funktionalisierte Hohlkörper (300) erhalten wird, der eine Funktionalisierungszusammensetzung (305) umfasst, die die Glasschicht (304) im Oberflächenbereich auf der Seite der Glasschicht (304), die dem Innenvolumen (301) abgewandt ist, zumindest teilweise überlagert.

2. Das Verfahren (100) nach Anspruch 1, wobei das Plasma aus einem Plasmavorläufer erhältlich ist, der einen aus der Gruppe bestehend aus Ar, N₂, O₂ und Luft oder einer Kombination von mindestens zwei davon umfasst.

3. Das Verfahren (100) nach Anspruch 1 oder 2, wobei der Vorläufer der funktionalisierenden Zusammensetzung das eine oder die mehreren Siloxane insgesamt in einem Anteil im Bereich von 1 bis 50 Gew.-%, bezogen auf das Gesamtgewicht des Vorläufers der funktionalisierenden Zusammensetzung, umfasst.

4. Das Verfahren (100) nach einem der vorhergehenden Ansprüche, wobei der Vorläufer der funktionalisierenden Zusammensetzung weiterhin ein Vehikel in einem Anteil im Bereich von 45 bis 99 Gew.-%, bezogen auf das Gesamtgewicht des Vorläufers der funktionalisierenden Zusammensetzung, umfasst.

5. Das Verfahren (100) nach einem der vorhergehenden Ansprüche, wobei mindestens eines der ein oder mehreren Siloxane ein Polyalkylsiloxan ist.

6. Das Verfahren (100) nach einem der vorhergehenden Ansprüche, wobei im Verfahrensschritt c) die Herstellung der Funktionalisierungszusammensetzung (305) aus dem Funktionalisierungszusammensetzungsvorläufer eine Vernetzung des einen oder der mehreren Siloxane oder eine Ausbildung von Si-O-Bindungen an der Wandoberfläche (303) im Oberflächenbereich oder beides umfasst.

7. Das Verfahren (100) nach einem der vorhergehenden Ansprüche, wobei der Hohlkörper ein Behälter ist.

8. Das Verfahren (100) nach Anspruch 7, wobei der Behälter ein Verpackungsbehälter für ein medizinisches oder ein pharmazeutisches Verpackungsgut oder beides ist.

9. Ein funktionalisierter Hohlkörper (300), erhältlich durch das Verfahren (100) nach einem der vorangehenden Ansprüche.

10. Ein Hohlkörper (300), umfassend eine Wand (302), die ein Innenvolumen (301) des Hohlkörpers (300) zumindest teilweise umgibt;
wobei die Wand (302)
a) eine Schicht aus Glas (304) umfasst, und
b) hat eine Wandfläche (303), die einen Oberflächenbereich umfasst;
wobei zumindest im Oberflächenbereich die Glasschicht (304) auf einer dem Innenvolumen (301) abgewandten Seite der Glasschicht (304) mit einer funktionalisierenden Zusammensetzung (305) überlagert ist;
wobei die funktionalisierende Zusammensetzung (305) folgendes umfasst
A. ein oder mehrere Siloxane, und
B. eine katalysierende Substanz, die geeignet ist, eine Vernetzung des einen oder der mehreren Siloxane zu katalysieren.

11. Der Hohlkörper (300) nach Anspruch 10, wobei die Wandfläche (303) Folgendes umfasst
a. eine Innenfläche (306), die dem Innenvolumen (301) zugewandt ist, und
b. eine Außenfläche (307), die vom Innenraum (301) abgewandt ist;
wobei die Außenfläche (307) den Oberflächenbereich umfasst.

12. Der Hohlkörper (300) nach Anspruch 10 oder 11, wobei die funktionalisierende Zusammensetzung (305) die katalysierende Substanz in einem Anteil im Bereich von mehr als 0 bis zu weniger als 1 Gew.-%, bezogen auf die funktionalisierende Zusammensetzung (305), umfasst.

13. Der Hohlkörper (300) nach einem der Ansprüche 10 bis 12, wobei die katalysierende Substanz Pt oder ein Peroxid oder beides umfasst.

14. Ein geschlossener Hohlkörper (400), umfassend eine Wand (302), die zumindest teilweise ein Innenvolumen (301) umgibt, das eine pharmazeutische Zusammensetzung (401) enthält;
wobei die Wand (302)
a) eine Schicht aus Glas (304) umfasst, und
b) hat eine Wandfläche (303), die einen Oberflächenbereich umfasst;
wobei zumindest im Oberflächenbereich die Glasschicht (304) auf einer dem Innenvolumen (301) abgewandten Seite der Glasschicht (304) mit einer funktionalisierenden Zusammensetzung (305) überlagert ist;
wobei die funktionalisierende Zusammensetzung (305) folgendes umfasst
A. ein oder mehrere Siloxane, und
B. eine katalysierende Substanz, die geeignet ist, eine Vernetzung des einen oder der mehreren Siloxane zu katalysieren.

15. Ein Verfahren (500), das als Verfahrensschritte umfasst
A) Bereitstellen des funktionalisierten Hohlkörpers (300) nach Anspruch 9 oder des Hohlkörpers (300) nach einem der Ansprüche 11 bis 13;
B) Einbringen einer pharmazeutischen Zusammensetzung (401) in das Innenvolumen (301); und
C) Schließen des Hohlkörpers (300).

16. Ein geschlossener Hohlkörper (400), der durch das Verfahren (500) nach Anspruch 15 erhältlich ist.

17. Eine Verwendung des funktionalisierten Hohlkörpers (300) nach Anspruch 9 oder des Hohlkörpers (300) nach einem der Ansprüche 10 bis 13, jeweils zum Verpacken einer pharmazeutischen Zusammensetzung (401).

18. Eine Verwendung einer Emulsion, die ein Siloxan enthält, zur Funktionalisierung mindestens eines Teils einer Außenfläche (307) einer Wand (302) eines Behälters,
wobei die Wand eine Schicht aus Glas (304) umfasst.

19. Eine Verwendung eines Gases zur Erzeugung eines Plasmas für den zumindest teilweisen Kontakt mit einem funktionalisierenden Zusammensetzungsvorläufer, der ein Siloxan umfasst, das auf einer Außenfläche (307) einer Wand (302) eines Behälters aufgebracht ist,
wobei die Wand eine Schicht aus Glas (304) umfasst.

20. Eine Verwendung eines Plasmas zum zumindest teilweisen Kontaktieren eines funktionalisierenden Zusammensetzungsvorläufers, der ein Siloxan umfasst, wobei der funktionalisierende Zusammensetzungsvorläufer auf eine Außenfläche (307) einer Wand (302) eines Behälters aufgebracht wird,
wobei die Wand (302) eine Schicht aus Glas (304) umfasst.

## Revendications

1. Procédé (100) pour fabriquer un corps creux fonctionnalisé (300), le procédé (100) comprenant comme étapes de procédé
a) fournir un corps creux, comprenant une paroi (302) qui entoure au moins partiellement un volume intérieur (301) du corps creux, dans lequel la paroi (302)
i) comprend une couche de verre (304), et
ii) a une surface de paroi (303), comprenant une région de surface ;
b) superposer au moins partiellement la couche de verre (304) dans la région de surface avec un précurseur de composition de fonctionnalisation sur un côté de la couche de verre (304) qui est opposé au volume intérieur (301),
dans lequel le précurseur de la composition de fonctionnalisation comprend un ou plusieurs siloxanes ; et
c) la mise en contact au moins partielle du précurseur de la composition de fonctionnalisation avec un plasma, ce qui permet d'obtenir le corps creux fonctionnalisé (300), comprenant une composition de fonctionnalisation (305) qui superpose au moins partiellement la couche de verre (304) dans la zone de surface sur le côté de la couche de verre (304) qui est opposé au volume intérieur (301).

2. Procédé (100) selon la revendication 1, dans lequel le plasma peut être obtenu à partir d'un précurseur de plasma qui comprend un élément choisi dans le groupe constitué par Ar, N₂, O₂ et l'air ; ou une combinaison d'au moins deux de ces éléments.

3. Procédé (100) selon la revendication 1 ou 2, dans lequel le précurseur de composition de fonctionnalisation comprend le ou les siloxanes au total à une proportion dans une gamme de 1 à 50 % en poids, sur la base du poids total du précurseur de composition de fonctionnalisation.

4. Procédé (100) selon l'une quelconque des revendications précédentes, dans lequel le précurseur de composition de fonctionnalisation comprend en outre un véhicule dans une proportion comprise entre 45 et 99 % en poids, par rapport au poids total du précurseur de composition de fonctionnalisation.

5. Procédé (100) selon l'une quelconque des revendications précédentes, dans lequel au moins un des un ou plusieurs siloxanes est un polyalkylsiloxane.

6. Procédé (100) selon l'une quelconque des revendications précédentes, dans lequel, dans l'étape c) du procédé, l'obtention de la composition de fonctionnalisation (305) à partir du précurseur de composition de fonctionnalisation comprend une réticulation du ou des siloxanes, ou une formation de liaisons Si-O sur la surface de la paroi (303) dans la région de la surface, ou les deux.

7. Procédé (100) selon l'une quelconque des revendications précédentes, dans lequel le corps creux est un récipient.

8. Procédé (100) selon la revendication 7, dans lequel le récipient est un récipient d'emballage pour un produit d'emballage médical ou pharmaceutique ou les deux.

9. Corps creux fonctionnalisé (300) susceptible d'être obtenu par le procédé (100) selon l'une quelconque des revendications précédentes.

10. Corps creux (300), comprenant une paroi (302) qui entoure au moins partiellement un volume intérieur (301) du corps creux (300) ;
dans lequel la paroi (302)
a) comprend une couche de verre (304), et
b) a une surface de paroi (303), comprenant une région de surface ;
dans lequel, au moins dans la région de surface, la couche de verre (304) est superposée par une composition de fonctionnalisation (305) sur un côté de la couche de verre (304) qui est orienté à l'opposé du volume intérieur (301) ;
dans laquelle la composition de fonctionnalisation (305) comprend
A. un ou plusieurs siloxanes, et
B. une substance catalytique qui est appropriée pour catalyser une réticulation du ou des siloxanes.

11. Corps creux (300) selon la revendication 10, dans lequel la surface de paroi (303) comprend
a. une surface intérieure (306) qui fait face au volume intérieur (301), et
b. une surface extérieure (307) qui est orientée à l'opposé du volume intérieur (301) ; dans lequel la surface extérieure (307) comprend la région de surface.

12. Corps creux (300) selon la revendication 10 ou 11, dans lequel la composition de fonctionnalisation (305) comprend la substance catalytique à une proportion dans une plage allant de plus de 0 à moins de 1 % en poids, sur la base de la composition de fonctionnalisation (305).

13. Corps creux (300) selon l'une quelconque des revendications 10 à 12, dans lequel la substance catalytique comprend du Pt ou un peroxyde ou les deux.

14. Corps creux fermé (400), comprenant une paroi (302) qui entoure au moins partiellement un volume intérieur (301) qui comprend une composition pharmaceutique (401) ;
dans lequel la paroi (302)
a) comprend une couche de verre (304), et
b) a une surface de paroi (303), comprenant une région de surface ;
dans lequel, au moins dans la région de surface, la couche de verre (304) est superposée par une composition de fonctionnalisation (305) sur un côté de la couche de verre (304) qui est orienté à l'opposé du volume intérieur (301) ;
dans laquelle la composition de fonctionnalisation (305)comprend
A. un ou plusieurs siloxanes, et
B. une substance catalytique qui est appropriée pour catalyser une réticulation du ou des siloxanes.

15. Procédé (500), comprenant comme étapes de procédé
A) fournir le corps creux fonctionnalisé (300) selon la revendication 9, ou le corps creux (300) selon l'une quelconque des revendications 11 à 13 ;
B) insérer une composition pharmaceutique (401) dans le volume intérieur (301) ; et
C) fermer le corps creux (300).

16. Corps creux fermé (400) pouvant être obtenu par le procédé (500) selon la revendication 15.

17. Utilisation du corps creux fonctionnalisé (300) selon la revendication 9, ou du corps creux (300) selon l'une quelconque des revendications 10 à 13, chacun pour le conditionnement d'une composition pharmaceutique (401).

18. Utilisation d'une émulsion, comprenant un siloxane, pour fonctionnaliser au moins une partie d'une surface extérieure (307) d'une paroi (302) d'un récipient,
dans lequel la paroi comprend une couche de verre (304).

19. Utilisation d'un gaz pour créer un plasma pour mettre au moins partiellement en contact un précurseur de composition de fonctionnalisation, comprenant un siloxane, qui est superposé sur une surface extérieure (307) d'une paroi (302) d'un récipient,
dans lequel la paroi comprend une couche de verre (304).

20. Utilisation d'un plasma pour mettre au moins partiellement en contact un précurseur de composition de fonctionnalisation, comprenant un siloxane, dans laquelle le précurseur de composition de fonctionnalisation est superposé sur une surface extérieure (307) d'une paroi (302) d'un récipient,
dans lequel la paroi (302) comprend une couche de verre (304).
